Europäisches Patentamt

European Patent Office

Office européen des brevets

(19)

(11) **EP 1 163 627 B1**

(12) **EUROPÄISCHE PATENTSCHRIFT**

(45) Veröffentlichungstag und Bekanntmachung des Hinweises auf die Patenterteilung:
**22.10.2003 Patentblatt 2003/43**

(51) Int Cl.$^7$: **G06K 11/08**, G06K 9/00, G06K 19/06, G09B 29/00

(21) Anmeldenummer: **00920557.6**

(22) Anmeldetag: **23.03.2000**

(86) Internationale Anmeldenummer:
**PCT/EP00/02586**

(87) Internationale Veröffentlichungsnummer:
**WO 00/057351 (28.09.2000 Gazette 2000/39)**

(54) **INFORMATIONSTRÄGER UND VERFAHREN ZUR ZWEIDIMENSIONALEN POSITIONSBESTIMMUNG AUF FLÄCHEN UND ZUR ZUGEHÖRIGEN AUSLÖSUNG VON PROGRAMMPROZESSEN**

INFORMATION CARRIER AND METHOD FOR DETERMINING TWO-DIMENSIONAL POSITIONS ON SURFACES AND FOR CORRESPONDINGLY STARTING PROGRAM PROCESSES

SUPPORT D'INFORMATIONS ET PROCEDE POUR LA DETERMINATION DE POSITION BIDIMENSIONNELLE SUR DES SURFACES ET POUR LE DECLENCHEMENT CORRESPONDANT DE PROCESSUS A PROGRAMME

(84) Benannte Vertragsstaaten:
**AT BE CH CY DE DK ES FI FR GB GR IE IT LI LU MC NL PT SE**

(30) Priorität: **24.03.1999 DE 19913343**
**11.05.1999 DE 19921778**

(43) Veröffentlichungstag der Anmeldung:
**19.12.2001 Patentblatt 2001/51**

(73) Patentinhaber: **Anitra Medienprojekte GmbH**
**81677 München (DE)**

(72) Erfinder: **BOCK, Wolfgang**
**D-80538 München (DE)**

(56) Entgegenhaltungen:
**EP-A- 0 543 118      DE-A- 3 327 493**
**DE-A- 19 612 406      US-A- 4 686 329**
**US-A- 5 416 312**

EP 1 163 627 B1

**Beschreibung**

Die Erfindung betrifft einen Informationsträger und ein Verfahren zur Positionsbestimmung eines Messpunktes auf einer Fläche des Informationsträgers mit einem Lesegerät ; wobei ein der gefundenen Position zugeordneter Programmprozess ausgelöst werden kann. In Verfahren zum Bedrucken von Papieren und anderen Flächen eines Trägers werden Muster hergestellt, die eine absolute Positionsbestimmung auf diesen Papieren oder Flächen erlauben. Die jeweils gemessene Position kann innerhalb der vermessenen Fläche gelten; sie kann sich aber auch auf einen beliebig grösseren Träger beziehen, wobei die vermessene Fläche nur ein Teil dieses Trägers ist.

**1. Stand der Technik**

1.1. Transparente Barcodes und andere Muster

Bekannt sind sicht- und unsichtbare Barcodes; z.B. ist es möglich, mit Hilfe fluoreszierender Tinten (sog. Signiertinten) einen transparenten Barcode aufzudrucken, der erst bei Beleuchtung durch UV-Licht sicht- und lesbar wird. DE 196 12 406 C2 beschreibt die Nutzung eines solches Verfahrens für "statische elektronische Fussnoten", d. h. dass vor Bedrucken des Informationsträgers festgelegt werden muss, ob eine bestimmte Stelle mit Hilfsinformationen ausgestattet wird. Die Erfindung hebt diese letztere Beschränkung auf und erlaubt darüber hinaus eine für bestimmte Anwendungen (Baupläne, Karten) relevante Messung von Entfernungen auf der bedruckten Fläche, lediglich durch Vermessen zweier Stellen.

1.2 Allgemeine Positionsbestimmungsverfahren

Allgemein bekannt sind

a) so genannte *optische Mäuse,* welche die Struktur der Fläche auf der sie liegen abbilden, und mit Methoden der Bildverarbeitung eine relative Bewegungsmessung durchführen. Sie messen jedoch keine absolute Position, und ferner beziehen sie die gemessene Information nicht auf die obige Fläche, sondern auf ein separates Display, wobei der Benutzer die Cursorposition nicht als absolute Koordinaten ermittelt, sondern mit Bezug auf eine virtuelle, rein elektronische Vorlage.
b) *Grafiktabletts* bei denen eine Papiervorlage auf eine elektronische, ein Koordinatensystem realisierende Vorrichtung aufgelegt wird, sodass durch das Papier hindurch die Position eines Messstiftes bestimmen kann.
c) *Positionsmesstische*, die eine starre Referenzvorrichtung aufweisen, welche ein Signal abgibt, mit Hilfe dessen sich die Position eines (z.B. magnetischen) Messstiftes dreidimensional bestimmen lässt, sodass bei bekannter Geometrie und Lage des zu vermessenden Objektes eine zweidimensionale Bestimmung der Position des Stiftes auf der Objektfläche möglich wird. Dieser Kategorie können auch optische Lesestifte zugeordnet werden, wobei die Referenzvorrichtung durch den Grafikmonitor im Zusammenhang mit der Auswertung eines CRT-Bildes gegeben ist.
d) bekannt sind ferner Verfahren, die es erlauben, durch *optisches Vermessen eines auf die Fläche aufgebrachten Musters* die Position des jeweiligen Musters zu bestimmen, sodass bei vorher bekannter Gestalt der Fläche die Position des benutzten Lesegerätes in Bezug auf diese Fläche berechnet werden kann. Ein solches Verfahren ist in DE 197 28 513 AI beschrieben und in einer spezielleren Variante ermittelt DE 3427 067 A1 die Position eines Messstabes in Bezug auf einbevorzugt optisch realisiertes - Lesegerät

Desweiteren ist ein Informationsträger nach dem Oberbegriff von Anspruch 1 aus US-A-5 416 312 bekannt. US-A-5 416 312 offenbart aber keine Code-Streifen, insbesondere keine Barcode-Streifen, sondern ein Muster aus einzelnen Punkten (single dots) welche voneinander getrennt aufgebracht sind, sodass dieses Muster von einem manuell geführten Punktlesegerät nicht decodiert werden kann, insbesondere nicht von einem manuell geführten Punktlesegerät, welches einen Oberflächenwiderstand misst. In der Tat wird in US-A-5 416 312 ein optisches Messverfahren mit einem Matrixlesegerät verwendet.
US-A-4 686 329 offenbart auch einen (Informations) träger, dessen Fläche ein gitterartiges Muster von parallelen Linien aufweist. Gemäss der Lehre der US-A-4 686 329 weisen die einzelnen Linien jedoch keine innere Struktur auf, die ihre Position codiert. US-A-4 686 329 arbeitet nach einem anderen Positionsbestimmungsprinzip, basierend auf der Auswertung der sich aus dem Gitter ergebenden Zellenstruktur. Ferner können auch die Muster nach US-A-4 686 329 nicht mit einem manuell geführten Punktlesegerät ausgelesen werden.

## 2. Erfindung

Der Beschreibung der Erfindung sind einige Definitionen vorangestellt.

Nachstehend bezeichnet *Primärinformation* das für die Nutzung mit blossem Auge bestimmte und bevorzugt mit konventionellen Drucktinten realisierte Abbild einer Information nach Art einer Partitur, eines Buches, einer Zeitung, einer Karte oder eines Bauplanes. *Informationsträger* bezeichnet das für den Aufdruck benutzte Substrat.

*Barcode* bezeichnet jeden maschinenlesbaren, z.B. zweidimensional aufgedruckten Code, insbesondere die aus Industrie und Handel bekannten "eindimensionalen" Codes, so genannt weil sie in einer einzigen Dimension mittels eines Punktdetektors oder Linienrasters gelesen werden können. *Muster* werden bevorzugt durch ein Druckverfahren realisiert, codieren eine Positionsinformation und überlappen dabei fallweise die Primärinformation. Muster können insbesondere aus speziellen Barcodes gebildet sein.

Vorstehende Muster, inklusive derjenigen für die Primärinformation - *überlappen* dann, wenn sie ganz oder partiell über- oder untereinander aufgebracht sind, wobei die entsprechenden Tinten aufoder nebeneinander (nach Art zweier ineinander verschachtelter Offsetraster) aufgebracht werden können.

Falls nicht explizit anders vermerkt, bedeutet *transparent*, bezogen auf eine aufgedrucktes Muster, dass dieses Muster entweder mit dem blossen Auge völlig unsichtbar ist, oder zumindest so durchsichtig oder durchscheinend - nach Art eines Pauspapiers - und dass es insbesondere die rein mit dem blossen Auge erfolgende Nutzung einer Primärinformation nicht stört.

*Programmprozess* bezeichnet ein bevorzugt per Computer, Controller u.ä. realisierte Abfolge von logischen Schritten, insbesondere wenn diese in der Bereitstellung von Daten resultiert; und zwar inklusive der - bevorzugt akustischen oder visuellen - Anzeige dieser Daten.

### 2.0 Beschreibung der Erfindung

Die Erfindung zielt darauf ab, die Position eines beliebigen Messpunktes auf einer Fläche eines mit Primärinformation versehenen Informationsträgers in einfacher Weise zu bestimmen.

Die Erfindung erreicht dieses Ziel durch einen Informationsträger nach Anspruch 1, und einem Positionsbestimmungsverfahren nach Anspruch 12. Weitere bevorzugte Ausführungsformen der Erfindung sind in den jeweils abhängigen Ansprüchen beschrieben.

Die Erfindung bringt demnach auf einer Fläche eines Informationsträgers, welcher fakultativ bereits mit einer "Primärinformation" bedruckt ist - z.B. als Partitur, Buch oder Landkarte - ein oder mehrere Muster auf, welche lokal die Position ausgewählter charakteristischer, lokal erkennbarer, insbesondere geometrischer Merkmale codieren: z.B. als Barcode oder mit ähnlichen flächigen Darstellungsverfahren; dabei werden bevorzugt Programmprozesse aufgerufen, welche dieser Position entsprechen. Dabei kann auch *nach* Fertigstellung der Fläche und *ohne Nachbearbeitung derselben*, einer beliebigen Position ein Programmprozess zugeordnet werden. Ein solches "charakteristisches Merkmal" ist z.B. eine Ecke (1) eines Musters; ganz allgemein ist es als ein Punkt oder eine Punktmenge $M$ so definiert, dass $M$ erstens mit Methoden der Bildverarbeitung gefunden und für $M$ eine Positionsbeschreibung ermittelt werden kann und es zweitens möglich ist, vorzugsweise für jeden Messpunkt K auf der Fläche einen von K ausgehenden Vektor[1] $\underline{KP}$ zu einem anderen Punkte P zu erklären, dessen Position algorithimisch aus $M$ gewonnen werden kann. $M$ könnte also z.B.

- ein Rechteck oder ein Kreis sein (P ist dann Mittelpunkt dieses Rechteckes oder Kreises) oder
- ein Geradensegment (eine von K ausgehende Gerade, die senkrecht auf der Geraden steht, welche durch dieses Segment definiert ist, schneidet diese im "Fallpunkt" P).

Das Verfahren bestimmt also in einem ersten Schritt die absolute Position von P und in einem zweiten Schritt den Vektor $\underline{KP}$ und mithin die Position von K.

Die vorstehenden Flächen können starr sein, nach Art einer aus Holzplatten oder starker Pappe gefertigten Kinderbuches; bevorzugt sind die Flächen jedoch biegsam nach Art einer Papierseite oder Folie. Nun ist es prinzipiell möglich, die Gestalt einer solchen Fläche in einem genügend kurzen Zeitraum zu ermitteln, insbesondere unter Zuhilfenahme entsprechender spezieller und zusätzlicher Markierungen ("genügend kurz" heisst, dass die Fläche in diesem Zeitraum ihre Gestalt nur unwesentlich verändert) und - mit erheblichem weiteren Aufwand - die auf dieser Fläche aufgebrachten Muster optisch oder sogar mittels physischen Kontaktes in dieser kurzen Zeit zu vermessen. Es ist jedoch ein solches Verfahren für die intendierten Anwendungen im Massenmarkt ungeeignet.

In einem weiteren Aspekt verwendet die Erfindung daher bevorzugt Verfahren, welche die biegsame Fläche auf einem vorbestimmten Teil des Lesegerätes definiert aufliegen lassen, bevorzugt mittels elektrostatischer oder pneumatischer Verfahren und bevorzugt so, dass die durch diesen Teil des Lesegerätes begrenzte Teilfläche näherungsweise eben

[1]Theoretisch kann dieser Vektor beliebig lang sein. In der Praxis sollte er so kurz sein, dass die rein lokale Bildverarbeitung eines kleinen Ausschnittes auf der Vorlage ausreicht, wie nachstehend beschrieben.

ist. Dabei ist Sorge dafür zu tragen, dass die Fläche nach Möglichkeit nur während der Messung an den Messkopf gedrückt wird, um ihre mechanische Beanspruchung zu minimieren.

In der bevorzugten einfachsten Variante wird die Fläche mit dem Lesegerät so heruntergedrückt, dass sie innerhalb eines zu vermessenden Pixels oder Liniensegmentes näherungsweise eben aufliegt; in einer weiteren bevorzugten Variante kann in der Zeit, während der der Lesekopf bewegt wird, mittels entsprechender Öffnungen Luft zischen Lesegerät und Fläche gepresst werden.

In einer weiteren bevorzugten Variante wird die Fläche - z.B. eine Aussschnitt aus einer Karte oder eine Seite eines Buches - in der Nähe des auszulesenden Punktes oder Zeilenrasters so vom Lesegerät angesaugt oder angezogen, dass die Fläche aufgrund ihrer Rest-Steifigkeit nahezu eben auf dem Lesegerät aufliegt. Dabei kann ebenso wie vorstehend Luft eingepresst werden, während das Lesegerät bewegt wird, und nur während der Messung die Teilfläche angezogen oder angesaugt werden.

Der Anmelder behält sich vor, für verschiedene hier mit offenbarte Aspekte der Erfindung ggf. separat darauf gerichtete Teilanmeldungen einzureichen.

2.1 Beschreibung der Ausführungsbeispiele Vorteile

Weitere Vorteile und Ausgestaltungen der Erfindung ergeben sich aus der nachfolgenden Beschreibung durch bevorzugte Ausführungsbeispiele. In der Beschreibung wird auf die beigefügte schematische Zeichnung Bezug genommen. In der Zeichnung zeigen:

Fig. 1 eine schematische Darstellung eines Trägers bezw. einer bedruckten Fläche zur Verwendung für das erfindungsgemässe Positionsbestimmungsverfahren

Fig. 2 eine Variante des Verfahrens nach Fig. 1 mit vereinfachten Mustern, ausgeführt als gekreuzte eindimensionale Barcodestreifen-Gitter

Fig. 3 die Details der eindimensionalen (horizontalen) Positionsbestimmung mittels Streifengitter nach Fig. 2

Fig.4 Details der 2-dimensionalen Positionsbestimmung mit gekreuzten Streifengittern mit verschiedenen physikalischen Eigenschaften nach Fig. 2

Fig. 5 ein Ausführungsbeispiel für ein optisches Lesegerät mit Zeilenkamera (s)

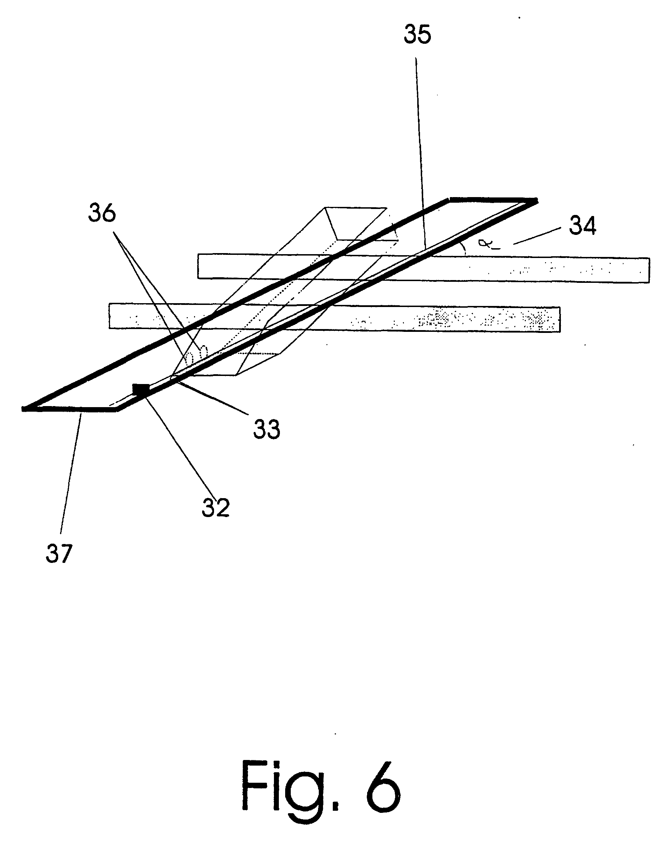

Fig. 6 die Zusatznutzung eines OCR-Scanstiftes für das hier beschriebene Positionsbestimmungsverfahren

Fig. 7 Beispiel für die Verwendung eines einzigen Musters (Gitter aus Fadenkreuzen mit jeweils lokal pro Fadenkreuz in einem Punktmuster niedergelegter absoluter Positionsinformation)

Fig. 8 Beispiel für die Verwendung eines einzigen Musters (Gitter aus Dreiecken mit durch das Lesegerät wahrnehmbaren Rand und lokal in einem Grauwert-Raster niedergelegter absoluter Positionsinformation)

2.1.1 Beschreibung der Beispiele

Die Positionsbestimmung erfolgt mit einem geeigneten Lesegerät. Der "Messpunkt" K entspricht definitionsgemäss einem physisch am oder im Lesegerät definierten Punkt; z.B. entspricht (15) der Ecke einer Detektorzeile, und die Punkte (37), (41), (3) der Mitte eines zweideimensionalen Sensor-Rasters.

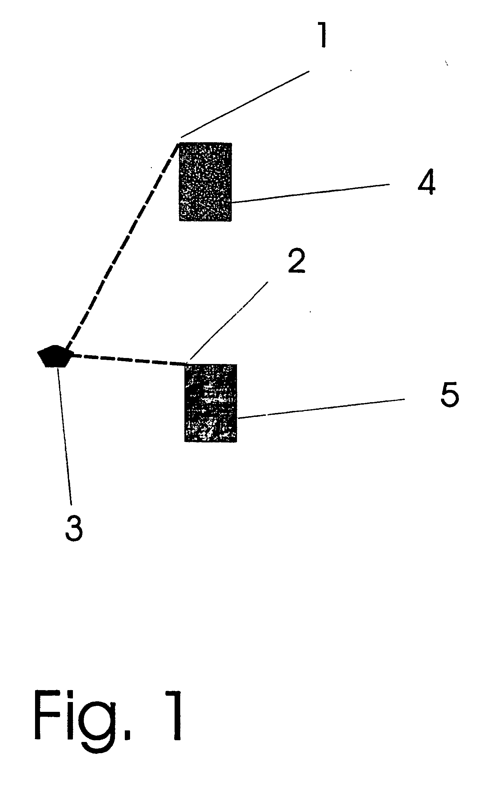

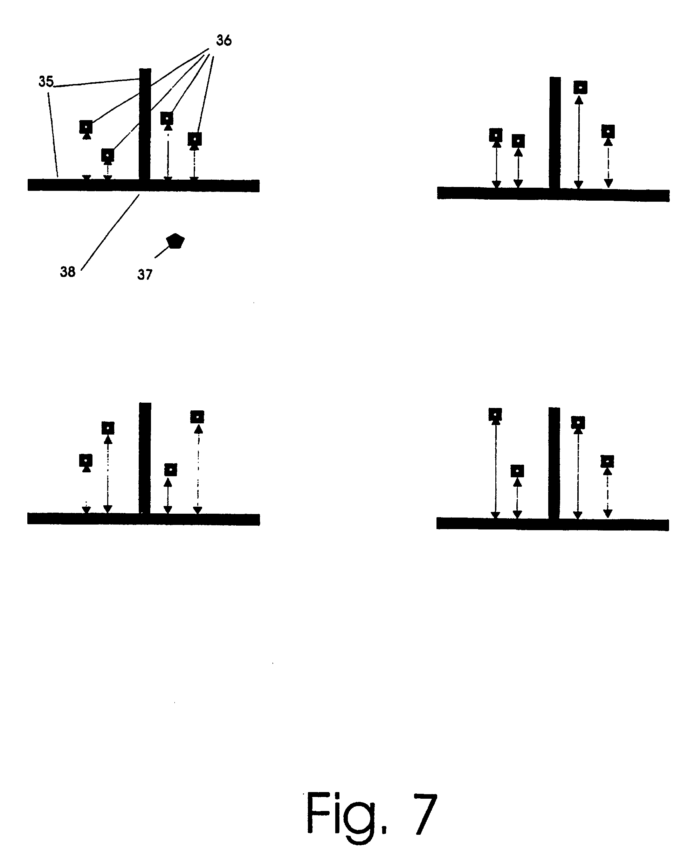

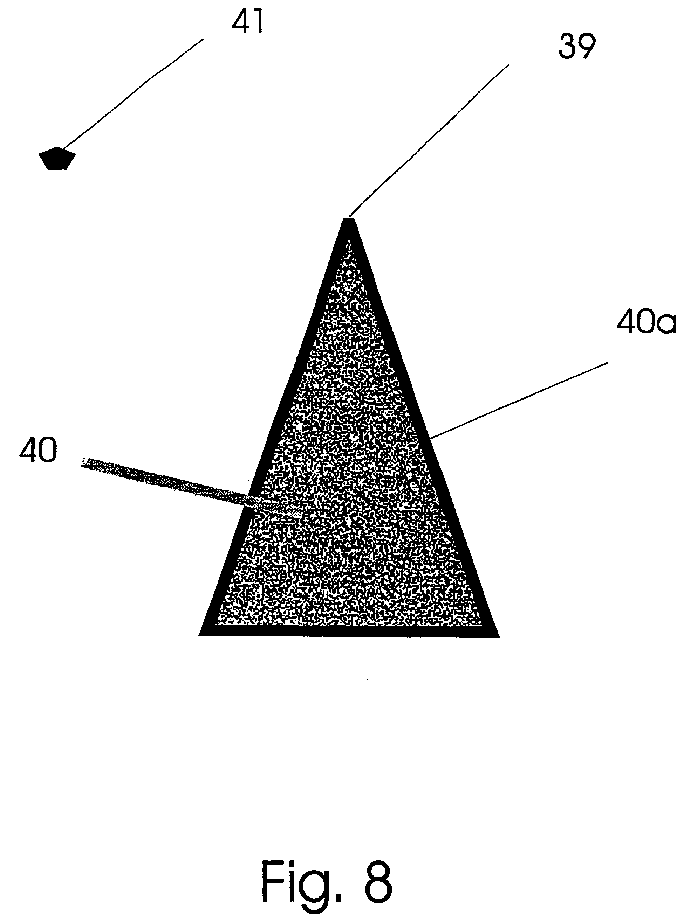

Zur Positionsmessung wird vorzugsweise in einem ersten logischen Schritt für eines der vorgegebenen Muster auf einem Träger, z.B. einem Informationsträger, ein jeweiliges charakteristisches Merkmal und der zugehörige Punkt P gefunden: beispielsweise ist in Fig. 1 der Punkt P für das Muster (4) als linke obere *Ecke* (1) angenommen; in Fig. 7 für das aus Fadenkreuz und Punkten gebildete Muster (35), (36) als *Kreuzungspunkt* (38); in Fig. 8 für das Dreieck (40a), (40) als obere *Ecke* (39).

Sodann wird in einem zweiten Schritt der Vektor KP als vorzeichenbehaftetes relatives Koordinatenpaar des jeweiligen Messpunktes relativ zu einem dieser charakteristischen Merkmale bestimmt: in Figs. 1, 7 und 8 sind K und P jeweils (3) und (1); (37) und (38); (41) und (39).

In einem dritten Schritt werden aus der lokalen Decodierung genau dieser Muster die absoluten Koordinaten des Punktes P auf der Fläche gefunden. Unter Zuhilfenahme der Information aus den beiden ersten Schritten wird dann die absolute Position des Messpunktes K (37), (41) oder (3) ermittelt.

Man kann folglich durch Positionsmessung an zwei solchen Messpunkten (bez. bei bekannter Winkellage des Sensors an einem einzigen Messpunkt) die zweidimensionale Lage des Lesegerätes auf der Fläche bestimmen und somit insbesondere die Position eines an diesem Lesegerät angebrachten Fadenkreuzes.

Das obige Messverfahren kann z.B. mit klassischer raster-orientierter digitaler Bildverarbeitung realisiert werden, denn diese erlaubt es:

■ in einem Bildausschnitt, der mit optischer oder anderer Sensorik gewonnen wurde, ein charakteristisches geometrisches Merkmal wie die Ecke oder die Kante eines Musters zu erkennen und diesem einen Punkt P mit einer auf dem verarbeiteten Bildraster definierten Position zuzuweisen
■ vorzeichenbehaftete Abstände eines Messpunktes K zum Punkt P, immer noch auf dem Bildraster, zu messen
■ die absolute Position von P aus einer lokalen Decodierung des Musters zu gewinnen.

Es genügt also bevorzugt ein einziger Arbeitsgang für diese drei Schritte.
Die Aufbringung solcher Muster auf die zu vermessende Fläche kann bevorzugt entweder

■ während der Produktion der Fläche erfolgen: z.B. kann man zusätzlich zum Drucken mit klassischen Farbtinten geeignete Spezialtinten aufbringen (z.B. im Offset-Buchdruck oder als zusätzliche Tinten eines Tintenstrahldruckers), oder
■ nachträglich: indem man eine existierende Druckseite oder Fläche - z.B. einen Architektur-Plan oder eine Landkarte - mit entsprechenden Mustern bedruckt, bestempelt etc.

Die im Obigen diskutierte Bildverarbeitung ist unabhängig von der physischen Realisierung des Musters.
Es können die jeweiligen Muster bevorzugt transparent sein, sodass sie die darunterliegende, auf der Fläche aufgebrachte visuelle Primärinformation - etwa bei einem Buch, einer Karte, oder einem Bauplan - nicht stören.
Es können insbesondere die Muster mit Spezialfarben und -belägen aufgebracht werden, die einen Nachweis per lokaler Messung physikalischer Parameter der Elemente des obigen Punktrasters ermöglichen - wie Lumineszenz[2], elektrischer Widerstand, Magnetisierung, Dielektrizitätskonstante, Transmissivität oder Reflexivität gegenüber polarisierter und unpolarisierter Strahlung, thermische Leitfähigkeit, mechanische Steifigkeit, Lichtabsorption, Brechungsindex, elektrochrome und thermochrome Effekte, sowie durch kleinste lokale Höhenunterschiede des Belages. Diese Muster können fallweise kombiniert werden, indem

a) voneinander verschiedene, insbesondere mit verschiedenen Sensoren nachweisbare Effekte an exakt demselben Ort der Fläche nachgewiesen werden; so kann z.B. an einem bestimmten Punkt der Vorlage der elektrische Widerstand einer Tinte gemessen werden, ohne das Ausmessen der Magnetisierung einer darunterliegenden, jedoch - auf die zweidimensionale Fläche bezogen - an derselben Stelle aufgebrachten magnetischen Tinte zu stören.
b) oder indem eine Tinte, bevorzugt durch Variation der entsprechenden Farbgradation oder - sättigung, so gedruckt wird, dass lokal variable Werte für den jeweil gemessenen physikalischen Parameter vor Drucklegung vorgeschrieben werden (z.B. in einer Postscript-File) und nach Produktion des Informationsträgers zuverlässig gemessen werden können. Dann können zwei oder mehr Muster miteinander kombiniert werden.
Dieses wird nun am Beispiel von *zwei* getrennt auszulesenden Mustern M1 (z.B. aus vertikalen Barcodestreifen (22) gebildet) und M2 (z.B. aus horizontalen Barcodestreifen (19) gebildet) diskutiert: hier genügt es, wenn für jede entsprechende Stelle jeweils drei Werte W1, W2 und W3 zugeordnet und zuverlässig gemessen werden, wie folgt:

■ S = W1     Muster M1 an dieser Stelle
■ S = W2     Muster M2 an dieser Stelle
■ S = W3     sowohl Muster M1 als auch Muster M2 an dieser Stelle

wobei S noch einen vierten Wert W0 ("Null") annimmt, wenn gar kein Muster auf der betreffenden Stelle aufliegt. Nun entsprechen auf jeder Stelle der fertig gedruckten Fläche die obigen vier Werte jeweils einem vom Lesegerät an dieser Stelle gemessenen Wert - z.B. einer dort gemessenen Intensität der Fluoreszenz oder des Oberflächenwiderstands. Wenn nun das Lesegerät zwischen diesen vier Werten ausreichend genau und konsistent diskriminieren kann, so kann es schliessen, welche Muster oder Musterkombinationen es einer bestimmten Stelle der Fläche zuzuordnen hat.
Die Verallgemeinerung auf mehr als zwei Muster ist offensichtlich.

[2]Lumineszenz bezeichnet bei einem Material die von aussen induzierte Abgabe von Licht ohne Umweg über Wärmeprozesse. Erfindungsrelevant sind insbesondere Fluoreszenz (z.B. bei fluoreszierenden Signiertinten), Phosphoreszenz, Elektrolumineszenz und Tribolumineszenz als Spezialfälle der Lumineszenz.

c) mit zwei verschiedenen Tinten in gerasterter Weise so gedruckt werden, dass die Muster zwar auf der makroskopischen, nicht jedoch auf der mikroskopischen Ebene einander überlappen.

2.1.2 Vorteile der Erfindung

Die Erfindung erlaubt - wie in Abschnitt 2.6 beispielhaft rechnerisch überschlagen, das schnelle und genaue Auslesen der Position von Punkten einer Fläche, auf die mit einem Lesegerät gezeigt wird, vergleichbar mit den aus der Datenverarbeitung bekannten optischen Stiften und anderen absoluten Positionsmessern auf einem Computermonitor, oder einem grafischen Tablett; wobei der erfindungsgemässe Träger jedoch direkt vom Papier, und ohne weitere positionsgebende Rastervorrichtungen (insbesondere ohne Monitor oder Tablett) abgegriffen wird. Bevorzugte Anwendungsbeispiele sind:

■  flexibler Aufruf von Programmprozessen gem. 2.1.3 nachstehend
■  Vermessung der Trägers bezw. einer Fläche, z.B. eines Bauplanes oder eines Fotos durch Aufsetzen eines Lesegerätes auf die entsprechenden Punkte der Fläche. Es muss dazu nicht die gesamte Fläche zur Verfügung stehen, sondern nur derjenige Teil der Fläche, welches die entsprechenden Messpunkte beinhaltet. Konkret muss z.B. für Entfernungsmessungen auf einer faltbaren Landkarte nur auf maximal zwei Seiten zugegriffen werden, wobei absolute Koordinaten in der Gesamtvorlage bestimmt werden, z.B. in der Form <Seitenzahl> : <x, y> . Dabei beziehen sich die KoordinateNx und y auf die Seite mit der Nummer <Seitenzahl>. Insbesondere können Abstands- und sonstige Messungen, über eine beliebige Distanz in einer beliebig grossen Fläche, sich auf eine Betrachtung der jeweils relevanten Seiten beschränken
■  Virtuelles oder auch, mit Spezialtinten, tatsächliches Hineinzeichnen und Hineinschreiben in die Fläche, oder Abzeichnen derselben: durch periodische Auswertung der Position des Lesegerätes auf der Fläche, ähnlich wie bei einem Grafiktablett. Insbesondere kann die "Fläche" ein noch unbeschriebenes Blatt sein, sodass der Schreibende geführt werden kann, um auf diese Weise das Schreiben - z.B. asiatischer oder sonstiger komplexer Schriftzeichen - schneller zu lernen.
■  Verbesserung der Handschriften- und Unterschriftenerkennung auf vorbehandelten Formularen und Ausdrucken durch Nutzung von Schreibgeräten mit eingebauter Positionsdetektion.
■  Zeitgleiche Nutzung von Laser-Pointern o.ä. auf einer Projektionsfläche, derart dass beliebig viele Teilnehmer eines Vortrages gleichzeitig auf die Fläche zeigen können, wobei die Positionen auf die gezeigt wird, jeweils pro Teilnehmer richtig ausgewertet werden.

In all diesen Fällen entfällt vorteilhaft das Auflegen des zu vermessenden Trägers auf eine fixe Vorrichtung nach Art eines Grafiktabletts oder eines Magnetfeld-Postionsmessers.

2.1.3 Aufrufen von Programmprozessen

Das verwendete Lesegerät kann vorteilhaft mit einer oder mehreren Tasten ausgestattet sein, sodass ein Tastendruck einen Prozess im Lesegerät selbst oder in einer - von diesem drahtlos oder per Draht verbundenen oder per Datenträger mit Daten versorgten - Hilfsvorrichtung auslöst, wobei dieser Prozess der jeweils gemessenen Position logisch zugeordnet ist. Z.B. kann die Primärinformation auf der Fläche durch eine Sekundärinformation ergänzt werden, welche in einer mit dem Lesegerät drahtlos oder physisch verbundenen Vorrichtung abgelegt ist und von dort abgerufen werden kann.

Das Lesegerät kann vorteilhaft mit einer akustischen oder visuellen Anzeige versehen werden, welche dem Benutzer signalisiert, dass der Messpunkt auf der Teilfläche einer Fläche positioniert ist, welche einem solchen Programmprozess zugeordnet ist, wobei diese Anzeige auch eine kurze Beschreibung dieses Prozesses beinhalten kann. Damit werden möglich

■  Hypertextähnliche Verweisfunktionen, aus einem Papier- oder sonstigen Fläche heraus, in ein Stichwortlexikon, ein anderes Buch etc., oder auf eine andere, durch absolute Koordinaten (oder Seite und Zeile) bestimmte Stelle der Fläche; ferner, Verweis in eine Positionsinformation, die in einem geeigneten Hilfsgerät abgelegt ist
■  Erstellung von beliebig grossen Computer-Menüs in Form von Papiervorlagen, die mit sichtbaren Ikonen bedruckt sind, und auf die man mit dem obigen Lesegerät zeigen und klicken kann. Man kann damit einen Menübaum drastisch verflachen und weil die Primärinformation nebst überlappenden Positionsmuster per Tintenstrahldrucker gedruckt werden kann, lassen sich diese Menüs sehr leicht umbauen

Insbesondere ist es möglich, ein universelles Lesegerät zu bauen, das in drahtloser oder leitungsgebundener Zusammenarbeit mit einem Computer die obigen Aufgabenstellungen integriert.

2.2 Ausführungsbeispiel für das Leseverfahren

Nun wird die erfindungsgemässe Positionsbestimmung auf einer mit einem Muster bedruckten Träger bezw. einer Vorlage erklärt. Hierzu lassen sich Punktmuster auswerten, wenn sie die zwei Anforderungen a) und b) nachstehend erfüllen

a) Lokalität: das Lesegerät muss mittels seines Flächensensors auf dem vom Benutzer ausgesuchten Punkt der Vorlage mindestens ein lokales *flächiges* Punktmuster - z.B. in Fig. 7 aus dem Kreuz (35) und den Punkten (36), oder in Fig. 8 aus dem Dreieck (40a) und seinem graugerasterten Inhalt (40) gebildet - vollkommen erfassen können, sodass die Positionsmessung der Punkte P (38), (39) gem. b) nachstehend lokal möglich ist. Das ist in Fig. 7 und 8 beispielhaft aufgezeigt, indem

- die Punkt-Muster (36), (40) jeweils so stark lokalisiert sind, dass die charakteristischen geometrischen Merkmale (38), (39) - die hier mit dem jeweiligen Punkt P identisch sind - zugeordnet werden können; darüberhinaus kann
- das Punktmuster (40) fakultativ von einem maschinell erkennbaren Rand (40a) begrenzt sein kann, der eine bestimmte Gestalt und Strichdicke aufweist.

In diesen Beispielen codieren in Fig. 7 die Punktmuster (36) die Koordinaten des Punktes P als vertikale Abstände und in Fig. 8 enthält das Punktmuster diese Information als Grauwerte (40) codiert.

b) lokale Codierung der absoluten Position eines geometrischen Merkmals des jeweiligen Punktmusters:
Die Existenz von Punktmustern, welche es ermöglichen, mit Verfahren der zweidimensionalen Bildverarbeitung und durch lokale Auswertung des Bildmusters die Position des obigen Punktes P zu gewinnen, wird nun anhand der beiden Beispiele in Fig. 7 und 8 nachgewiesen:

- ■ in Fig. 7 entspricht Punkt P dem Zentrum eines der (als Punktmenge $\mathcal{M}$ interpretierten) Fadenkreuze
- ■ für das Dreieck der Fig. 8 können mehrere geometrische Merkmale als $\mathcal{M}$ definiert werden (Kante, Schwerpunkt, Spitzen. etc.); man wird sich im Rahmen einer Normung normalerweise auf eine Ecke verständigen, z.B. kann der Punkt P per Normung der oberen Ecke zugewiesen werden.
- ■ die absolute Position von P wird durch eine lokale Bildverarbeitung gewonnen: z.B. indem in Fig. 7 das Fadenkreuz als Koordinatensystem interpretiert wird, in dem jeder der lokalen Punkte (36) durch seine Ordinate eine bestimmte Anzahl von Bits codiert, und die Aneinanderreihung der gewonnenen Bits die absoluten Koordinaten von P codiert; oder indem in Fig. 8 diese Bits beispielsweise durch Messung der Grauwerte decodiert werden. bezogen auf ein festgelegtes Raster (40a) im Inneren des Dreiecks.

Nun kann die für den auf dem Flächenraster, mit Mitteln der Bildverarbeitung bestimmte, Position des Messpunktes K relativ zu P gefunden werden. In Figs. 7 und 8 entspricht K jeweils den Punkten (37) und (41), also den im Bild eingezeichneten Fünfecken.

Alle Ausführungsbeispiele unterstellen, dass die zu dieser Interpretation erforderlichen geometrischen Charakteristika und Rechenvorschriften entweder in entsprechender Weise genormt sind, oder vor der eigentlichen Positionsmessung zur Verfügung stehen (z.B. durch Auslesen eines Inhalts- und Beschreibungsverzeichnisses aus einem bevorzugten Bereich der Fläche) oder extern (z.B. auf externen Servern) zur Verfügung gestellt werden.

Ferner wird unterstellt, dass ausreichend viele dieser Punktmuster auf der Fläche angebracht sind, um - mit einem bestimmten Lesegerät - eine Positionsbestimmung an jedem Messpunkt auf der Fläche zu erlauben. Das bedeutet, dass ein im Arbeitsbereich der Fläche an einem beliebigen Punkt aufgesetztes Lesegerät mindestens ein solches lokales Punktmuster vollständig sehen muss. Dazu ist es zweckmässig, die Punktmuster jeweils in einem regelmässigen Gitter anzuordnen: z.B. wird bei Fig. 7 das Gitter zweckmässigerweise einem quadratischen Raster entsprechen, bei Fig. 8 einem Feld von Dreiecken.

Schliesslich sei noch angemerkt, dass die Muster so gewählt werden können, dass sie auch in der lokalen Bildverarbeitung eine eindeutige Richtung im Dokument vorgeben, z.B. als Fadenkreuz mit obenliegenden Punktmustern oder als Dreieck (Figs. 7 und 8). Es sind aber auch Muster mit mehreren bevorzugten Richtungen machbar, vor allem wenn die Orientierung eindeutig aus der Primärinformation (z.B. Buch, Landkarte mit Windrose etc.) folgt.

2.3 Einsatz eines senkrecht gekreuzten Gitters aus Spalten und Zeilen

Die Bildverarbeitung nach Figs. 7, 8 oder 1 kann durch eine bevorzugte Spezialisierung der verwendeten Muster deutlich vereinfacht werden.

2.3.1 Nutzung von Codestreifen zur eindimensionalen Positionsbestimmung

Die in Abschnitt 2.1 und in Fig. 1 diskutierten Muster werden vorteilhaft als Codestreifen realisiert; letztere sind definiert als gerade Streifen, die sich durchgängig über die gesamte Primärinformation erstrecken, und die ein internes Muster aufweisen, welches Informationen codiert, z.B. indem die Codestreifen gerade Linien variabler Breite beinhalten, die als Barcode ausgelesen werden können (9). Hinfort wird ein Informationsträger angenommen, auf den diese Codestreifen entweder waagerecht oder senkrecht aufgebracht sind, und ihnen kann nun ihr oberer oder linker Rand als charakteristisches geometrisches Merkmal zugewiesen werden, wobei "oben" und "links" durch die Art definiert werden, wie der Benutzer ein entsprechend markiertes Lesegerät hält. Dieser Rand kann durch eine Linie besonderer Breite charakterisiert sein.

*Für einen einzelnen Codestreifen* kann der Punkt P (8a) dann als Fallpunkt eines vom Messpunkt K (15) ausgehenden Geradensegmentes auf diesen Rand (8) definiert werden.

Nun soll die als lokales Muster, nach Art eines Barcodes, im Codestreifen niedergelegte Information insbesondere die absolute eindimensionale Koordinate von P (also nach Konvention dessen Abszisse) enthalten. Damit kann der Vektor KP bestimmt werden, wie in 2.4.1 nachstehend detailliert.

*Für eine parallele Schar von Codestreifen* (6) oder (9) und (11) kann ebenfalls - per Konvention - der Punkt P (8a) als Fallpunkt von K (15) auf den *nach rechts nächst stehenden* linken Rand eines Codestreifens (8) aus der Schar definiert werden, per Rechenvorschrift "finde den Abstand eines Messpunktes zum linken Rand des nach rechts nächst gelegenen Codestreifens". Die Nutzung einer Schar möglichst eng aneinander liegender und möglichst schmaler Codestreifen erlaubt es insbesondere, die Positionsmessung in einem eng lokalisierten Teil der Fläche vorzunehmen.

Eine Schar paralleler Codestreifen, in welcher der Abstand der linken Ränder für zwei aufeinanderfolgende Codestreifen konstant ist, wird hinfort als *eindimensionales Gitter* bezeichnet. Damit wird die in 2.4.1 beschriebene Rechenvorschrift weiter vereinfacht.

2.3.2 Nutzung zweier senkrecht gekreuzter eindimensionaler Gitter aus Codestreifen

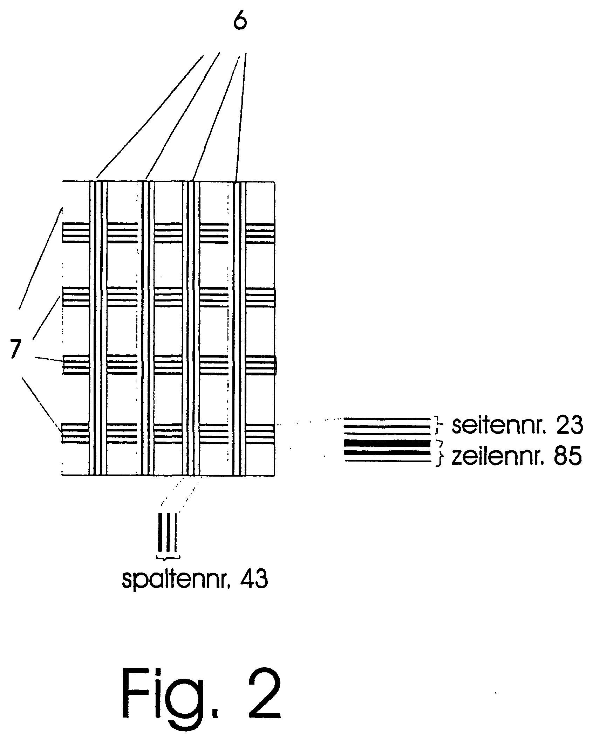

Zur zweidimensionalen Koordinatenbestimmung werden zwei eindimensionale Gitter senkrecht gekreuzt, entsprechend Fig. 2, wobei per Konvention angenommen wird, dass das eine Gitter aus waagerechten und das andere demzufolge aus senkrechten Codestreifen gebildet ist. Hier werden die gekreuzten Muster mit durchgängig über die gesamte Primärinformation geführten Streifen so gedruckt, dass ein jedes Muster separat ausgelesen werden kann, entweder von ein und demselben Sensor, oder von verschiedenen Sensoren, und dabei bevorzugt die gesamte Breite eines Zeilensensors genutzt wird.

Das Verfahren sucht nun für einen vorgegebenen Messpunkt (23) genau zwei Codestreifen (22) und (19) aus - für die jeweils der linke Rand oder der oberste Rand dem Messpunkt K am nächsten liegen - und kann daraus, wie in Abschnitt 2.4 dargelegt, die Positionsmessung mit kleinen Bildausschnitten leisten, insbesondere für beliebig grosse Flächen.

Der vorstehend beschriebenen Musterkombination können weitere Muster überlagert werden, welche eine Feinkorrektur der ausgelesenen Position ermöglichen. Solche Muster können bevorzugt in einem eigenen Frequenzspektrum fluoreszieren und in 2.3.3 nachstehend wird ein zugehöriges Verfahren beschrieben.

2.3.3 Lesegerät

Das Auslesen der Position basiert auf einem Lesegerät, welches ein lokales Raster auf der Fläche vermisst und einem Fadenkreuz o.ä. geometrisch einen Messpunkt zuordnet, der auf diesem Raster liegt.

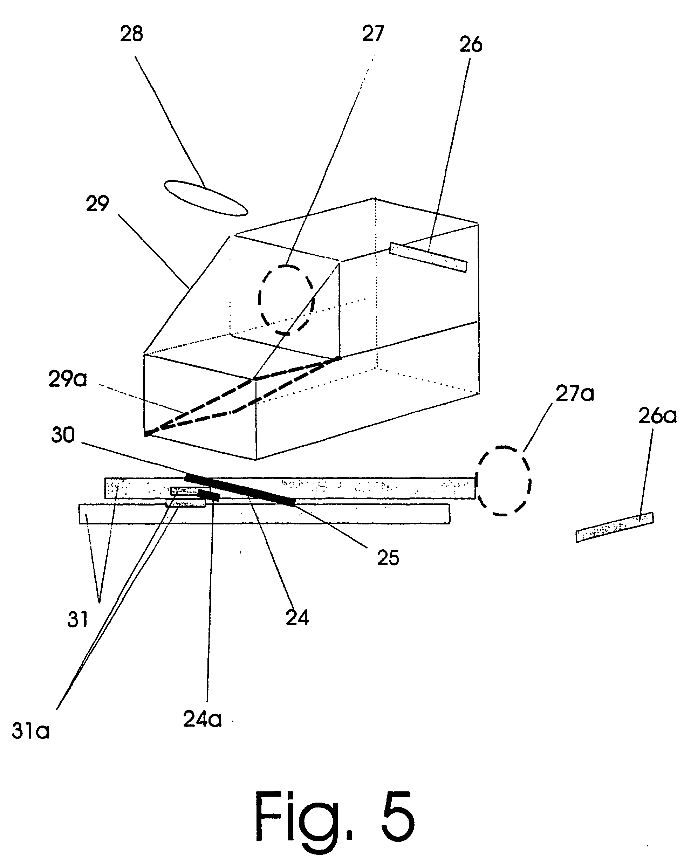

Fig. 5 zeigt ein Ausführungsbeispiel für die optische, auf Lumineszenz basierende Vermessung. Dieses Lesegerät nutzt vorteilhaft Anregungslicht, das von einer Quelle (28) durch teildurchlässige Spiegel (29), (29a) auf eine Teilfläche gelangt, die nur von dieser Quelle beleuchtet wird. Das von den beiden Messpunkten (30) und (25) berandete Linienraster (24) bedeckt ein Codestreifenpaar (31) wobei das komplementäre senkrecht darauf stehende Paar nicht eingezeichnet ist.

Die Teilfläche luminesziert bevorzugt im sichtbaren Bereich und insbesondere dort, wo (24) die Codestreifen überlappt; diese Lumineszenz wird von einer Kameralinse (27) auf die Detektorzeile (26) abgebildet.

Durch Vermessen beider Messpunkte (30) und (25) kann dann die zweidimensionale absolute Position des Lesegeräts in Bezug zur Fläche genauer bestimmt werden.

Die in 2.3.2 erwähnte Feinkorrektur erfolgt mittels eines weiteren, überlagerten Musters (31 a) - wobei auch hier nur ein Streifenpaar eingezeichnet ist; dieses letztere Muster wird mittels eines kleineren Linienraster (24a) abgestastet, das vermöge eines halbdurchlässigen Spiegels (29a), einer weiteren, einen deutlich kleineren Ausschnitt als (27) erfassenden, Optik (27a) und einem weiteren Sensor (26a) ausgewertet.

Die Nutzung von zwei Optiken und Sensoren macht insbesondere dann Sinn, wenn es sich um Massenmarktkomponenten mit verschiedenen Brennweiten handelt, wovon zwei deutlich billiger sein können als ein einziger, hoch auflösender Lesekopf.

2.4 Detaillierte Funktionsbeschreibung anhand eines Beispiels

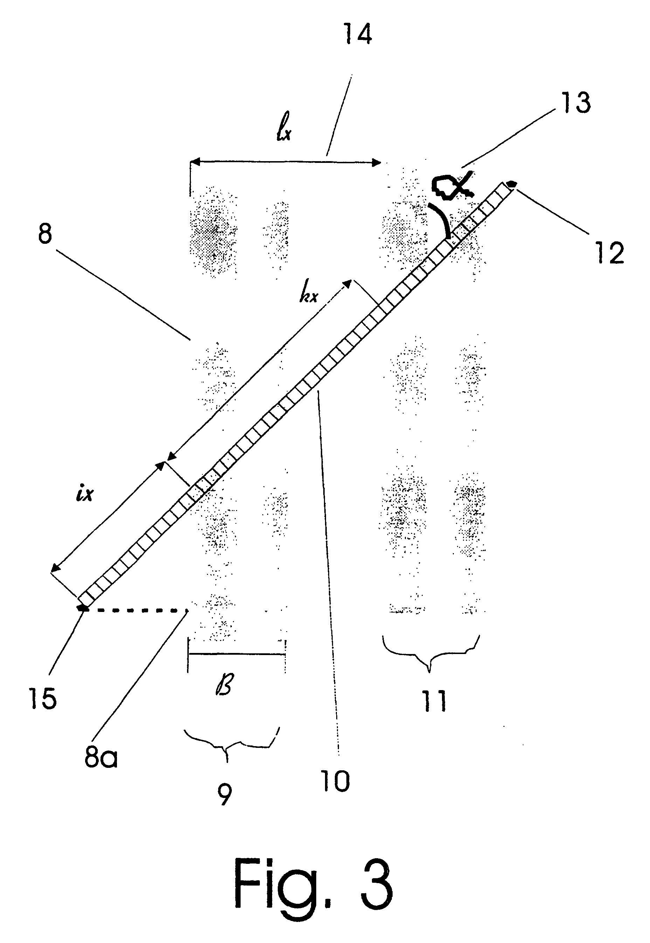

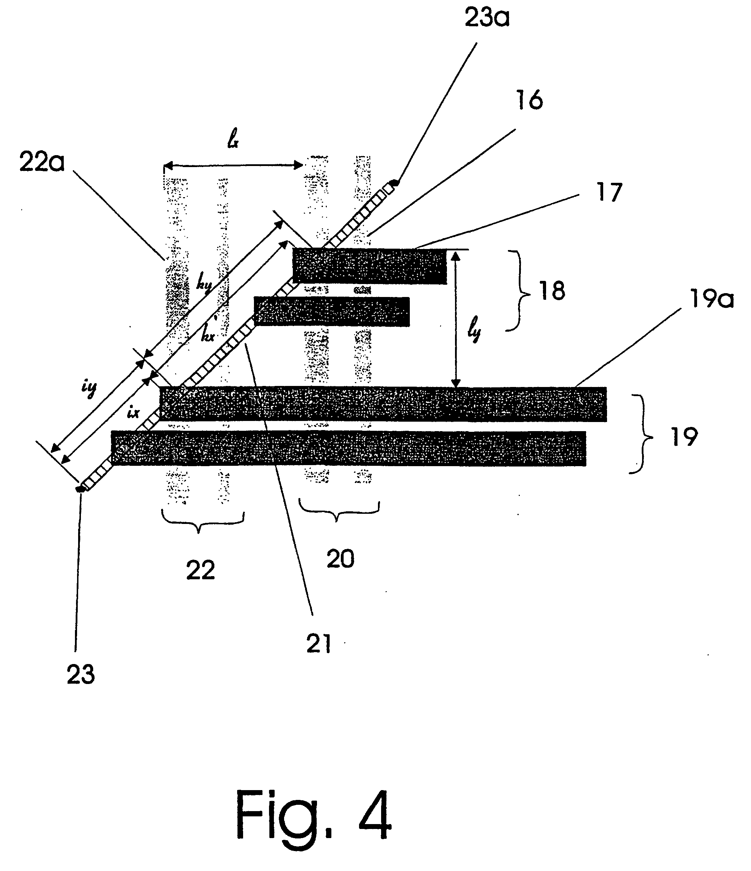

Die Durchführung des Verfahrens wird nun am Beispiel der Positionserkennung auf einer ebenen Papierseite unter Bezugnahme auf Fig. 3 und 4 detailliert erläutert. Es wird zwar unterstellt, dass die Positionsbestimmung über die Vermessung der Muster mittels eines optischen Lesegeräts gem. 2.3.3 erfolgt, die Betrachtung ist aber von der zum Nachweis der Gitter verwendeten Technik unabhängig.

2.4.1 Positionsbestimmung in einer Dimension

Die Positionsmessung wird zunächst anhand des eindimensionalen Gitters **Gx** (9), (11) aus senkrechten Codestreifen erklärt, das sich normalerweise vom unteren bis zum oberen Rand der Fläche erstreckt wobei jeder Codestreifen eine maximale Breite **B** hat. Wie in Fig. 3 dargestellt, sei der Abstand zwischen dem jeweiligen linken Rand zweier aufeinanderfolgender Codestreifen dabei **lx**, wobei **lx** grösser sei als **B** . Bei den stark vereinfachten eindimensionalen Barcode- Codestreifen (9) und (11) entspricht die Breite einer Linie des Barcodes genau einer Ziffer, und diese Codestreifen beinhalten in dieser Weise jeweils den Wert 42 und 43.

Die waagerechte Koordinate des linken Randes eines bestimmten Codestreifens wird durch die Zahl **Nx** festgelegt:

$$N x^* \; lx \qquad\qquad (2.1)$$

wobei **N x**$^*$ = **0, 1, 2, 3** .... und wobei angenommen wird, dass der linke Rand des ersten Codestreifens auf der Horizontalposition 0 der Fläche sitzt (bei einem Buch oder einer Zeitung würden in diesem vereinfachten Beispiel die Codestreifen fortlaufend und aufsteigend numeriert).

Auf der Basis dieses Wertes kann die *waagerechte* Position eines Lesegerätes auf der Fläche bestimmt werden.

Das ausgewertete Linienraster (10) sei durch den Messpunkt (15) links berandet, dessen Position es bestimmt, und es entspricht z.B. per geometrischer Projektion einer CCD-Detektorzeile der in 2.3.3 beschriebenen Linienkamera.
Nun lässt sich durch Auslesen der Muster entlang diesem Linienelement die waagerechte Koordinate **X** des Messpunktes (15) bestimmen:

a) in einem ersten Schritt wird durch Auswertung der Helligkeit entlang des Liniensegmentes der rechts nächstliegende Codestreifen gefunden und der entsprechende Barcode wird decodiert, woraus sich die Spaltennummer **Nx** ergibt und mithin aus Formel (2.1) die absolute x-Koordinate des linken Randes (8) des Codestreifens (9).
b) in einem zweiten Schritt wird der Abstand des Messpunktes (15) zu diesem Rand bestimmt. Das Linienraster (10) wird dabei als lang genug angenommen, um immer zuverlässig den linken Rand mindestens zweier aufeinanderfolgender Codestreifen zu überdecken, bei einem Neigungswinkel $\alpha$ (13) von näherungsweise 45 Grad. Es sei **kx** die dadurch bestimmte Strecke. Dann gilt

$$\sin(\alpha) = lx \, / \, kx \qquad\qquad (2.2)$$

Der Winkel $\alpha$ kann folglich während der Auswertung des Linienrasters gemessen werden.
Nun sei **ix** die Länge der Strecke, entlang des vermessenen Liniensegmentes, vom Punkt (15) bis zum Schnittpunkt mit dem linken Rand (8) des Codestreifens (9). Dann gilt für die eindimensionale Position **X** des Messpunktes (15)

$$X = Nx * 1 - ix * \sin(\alpha) = Nx * lx - ix * lx/kx = (Nx - ix\,/kx) * lx \qquad\qquad (2.3)$$

Die Position eines zweiten Messpunktes (12) ergibt sich aus dem Winkel $\alpha$ und der Länge des Linienrasters. Sie kann auch mit einer zu (2.3) analogen Formel gefunden werden.
In die Genauigkeit und Zuverlässigkeit des Verfahrens gehen folgende Faktoren ein:

i) Fehler bei der Ermittlung von **Nx,** also bei der Decodierung des im Codestreifen niedergelegten Musters

ii) Fehler in der Bestimmung von **ix** und **kx,** die bei der Abbildung und Abtastung des linken Randes der Codestreifen auftreten: diese sind bedingt durch Fehler in der Optik und durch die endliche Auflösung der elektronischen Detektorzeile, durch die Genauigkeit, mit der die Codestreifen beim Druck gelegt wurden, sowie durch nachträgliche Veränderungen (durch Feuchtigkeit, Temperatur, mechanische Beanspruchung etc. bedingten) der zur vermessenden Fläche.

iii) fehlerhafter Wert für **Ix,** durch Fehler bei der Aufbringung des Musters und durch nachträgliche Veränderung der Fläche wie oben beschrieben.

Die Fehler in ii) und iii) können in bestimmten Situationen durch eine einfache Eichung des Messgerätes nach Abschnitt 2.5 nachstehend minimiert werden

Weil die Messung nach Formel (2.3) unabhängig von $\alpha$ ist, muss $\alpha$ nur ungefähr 45 Grad betragen und lediglich während der Messung konstant bleiben. Der Wert von ungefähr 45 Grad für $\alpha$ kann bei manueller Nutzung des Gerätes durch Beachten einfacher Markierungen am Lesegerät erreicht werden. Weil jedoch $\alpha$ nach Formel (2.2) während der Vermessung gewonnen wird, ist es auch möglich, grössere Abweichungen von diesem Referenzwert von 45 Grad zu signalisieren und zu korrigieren:

■ bei manuell geführten Lesestiften geht dies am einfachsten mittels einer grafischen oder akustischen Anzeige
■ bei automatisierten Lesevorrichtungen kann der Sollwert für $\alpha$ durch gesteuerte Nachführung des Lesekopfes erreicht werden.

2.4.2 Positionsbestimmung in zwei Dimensionen

Es seien bevorzugt zwei eindimensionale Gitter aus waagerechten Codestreifen **Gy** (18) und (19) und Codestreifen **Gx** (22) und (20) senkrecht gekreuzt, wie in Fig. 4 dargestellt.

Nun wird ausgeführt, wie sich die Spaltennummern für die senkrechten Codestreifen in **Gx**, und die Zeilennummern für die waagerechten Codestreifen in **Gy** bestimmen lassen, zeitgleich und getrennt, und zwar auch für solche Stellen der Fläche, an denen Spalten und Zeilen einander überlappen. Dabei erfolgt die Betrachtung nur für einen Messpunkt (23). Wiederum wird beispielhaft eine optische Auslesung unterstellt.

Hier werden vorteilhaft verschiedene Signiertinten eingesetzt, die unter Anregung durch eine UV-Linie (z.B. bei 380 nm) in jeweils verschiedenen Farben des sichtbaren Spektrums lumineszieren: für **Gy** in einem Spektralband **Sy** - z.B. der Farbe Grün; und für **Gx.** analog in einem Spektralband **Sx** - z.B. der Farbe Rot; und die im Sichtbaren transparent sind, also die Spektralbänder **Sy** und **Sx.** durchlassen.

Das Linienraster (21) lässt sich ähnlich wie in 2.4.1 z.B. als Abbild eines Doppel-Zeilendetektors einer zum Lesegerät gehörenden elektronischen Kamera interpretieren; wobei der eingesetzte Zeilensensor nun mit eng aneinander liegenden, jedoch getrennten Detektorzeilen für "rot" und "grün" aufgebaut ist, wie z.B. die Farb-Zeilensensoren in hochwertigen Profikameras und in kommerziellen Farbscannern, und folglich werden **Gx** und **Gy** zeitgleich vermessen.

Nun muss noch sichergestellt werden, dass das UV-Licht sowohl **Gx** als auch **Gy** erreicht und dass das von **Gx** und **Gy** emittierte Lumineszenzlicht tatsächlich zum Sensor gelangt.

■ am einfachsten lässt sich dieses erzielen, wenn beiden Gitter **Gx** und **Gy** mit Mitteln der klassischen Drucktechnik so gerastert werden, dass die jeweiligen Druckpixel für **Gx** und **Gy** nicht überlappen. Dabei wird unterstellt, dass auf jedes Element des zu vermessenden Linienrasters (21) eine jeweils grosse Anzahl der im Bereich **Sx** und **Sy** lumineszierenden Druckpixel entfällt
■ alternativ sei unterstellt, dass zuerst **Gx** und anschliessend **Gy** gedruckt werden, und zwar jeweils ungerastert, dass also das Druckmuster für **Gy** dasjenige für **Gx** an bestimmten Stellen vollständig überlappt. Auf einer solchen Überlappungsstelle (17) in Fig. 4 trifft dabei UV-Licht auf, welches die Signiertinte für **Gy** rot lumineszieren lässt. Das anregende UV-Licht wird von **Gy** teilabsorbiert und trifft dann auf die darunterliegende Signiertinte für **Gx.**, welche grün luminesziert. Weil aber in diesem Farbbereich (im Grünen) die darüberliegende Tinte für **Gy** durchlässig ist, gelangt auch dieses Lumineszenzlicht zum Sensor. Nun wird normalerweise zwar **Gx** an der Stelle (16) stärker lumineszieren als an der abgedeckten Stelle (17), aber weil die Codestreifen digital interpretiert werden, kann man diesen Effekt durch eine Schwellwertrechnung eliminieren

Die simultane Auslesung beider Gitter ist auch mit anderen Verfahren machbar, z.B. indem **Gx** und **Gy** jeweils durch Messung der Magnetisierung und dem Nachweis einer bestimmten optischen oder thermischen Leitfähigkeit nachgewiesen werden. Der hierzu erforderliche Aufwand ist derzeit noch hoch, dürfte aber durch zunehmende Minaturisierung in der Sensorik und in der zugehörigen DSP-Elektronik rapide sinken.

Jedenfalls gilt nun für das eingezeichnete Linienelement nach wie vor die Formel (2.3), in die man die im **Sx** - Zeilendetektor für **Sx** ermittelten Werte für **ix, kx,** und **lx** sowie für die Spaltennummer **Nx** einsetzt. Man schreibt daher für die waagerechte Koordinate **X** des Messpunktes **K** (23) nach Abschnitt 2.3.1 i.O.

$$X = ix * \sin(\alpha) - Nx * lx = ix * l/k - Nx * l = (Nx.\ ix/kx) * lx \qquad (2.4)$$

Im Spektralbereich Sy ermittelt man ganz analog für die senkrechte Koordinate Y von K

$$Y = iy * \sin(\alpha) - Ny * ly = iy * l/k - Ny * l = (Ny-\ iy/ky) * ly \qquad (2.5)$$

Für einen zweiten Messpunkt (23a) lassen sich analoge Formeln aufstellen, und weil damit die Lage des Rasters (21) in der Fläche eindeutig bestimmt ist, kann daraus auch die Lage des Lesegerätes und folglich eines an diesem Lesegerät angebrachten Fadenkreuzes eindeutig bestimmt werden.

2.5 Eichung des Lesegerätes auf die Fläche

Die Konstanten **lx** und **ly** können durch eine Industrienormung festgelegt werden, flexibler sind jedoch Lösungen, die es ermöglichen, sie der Fläche oder sonstigen Verzeichnissen zu entnehmen. Sie werden in jedem Fall bei Drucken der Fläche festgelegt.
Nun kann aber eine Fläche - speziell eine solche aus Papier - schrumpfen oder sich dehnen; es können die aktuellen Grössen für **lx** und **ly** jedoch gemessen und damit auch die Werte **ix, iy** und **kx, ky** in Formeln (2.4) und (2.5) näherungsweise berichtigt werden.
Hierzu kann vorteilhaft auf der Fläche ein sichtbares grafisches Element (z.B. ein Kreuz) gedruckt werden, das genau senkrecht oder waagerecht auf den unsichtbaren Codestreifen nach 2.4 steht. Bei Schriftdokumenten mit konventionell gedrucktem Text kann für diesen Eichzweck näherungsweise eine waagerechte Textzeile verwendet werden.
Dazu wird das Lesegerät mit einer geeigneten Eichmarke (z.B. einem Fadenkreuz) versehen. Nun können die beiden Grössen **lx** und **ly** , durch Verarbeitung der pro Pixel gemessenen Werte in zwei Messschritten entlang der Detektorzeile ermittelt werden.

2.6 Abschätzung der Leistung des optischen Verfahrens

In diesem Abschnitt wird die Leistung des im Obigen geschilderten Verfahrens anhand des Standes der Technik und nur für optische Ausleseverfahren betrachtet, um die Möglichkeit des Einsatzes in den in Abschnitt 2.1.2 dargelegten Anwendungen zu belegen. Zu diesem Zweck werden explizite quantitative Annahmen gemacht.

2.6.1 Genauigkeit der Positionsbestimmung:

*Grobe* Fehler können durch falsches Auslesen der Codestreifen entstehen, also der Werte **Nx** und **Ny**.. Auf Basis der Technik klassischer Barcodeleser, welche unter sehr viel ungünstigeren Bedingungen operieren als die hier postulierten Lesegeräte, sowie plausibler zu codierender Grössen für **Nx** und **Ny**. (die normalerweise fünf- oder sechsstelligen Ziffern entsprechen) kann man unterstellen, dass Codestreifen mit einer Breite im Bereich 1 cm und darunter die geforderten Informationen codieren und zuverlässig zum Auslesen bereitstellen können. *Kleinere* Fehler können bei Bestimmung der lokalen Abstände der Messpunkte zu den jeweiligen Codestreifen auftreten und werden vor allem durch Ungenauigkeiten bei der Drucken der Fläche, aber auch durch Unzulänglichkeiten der Optik und die endliche Auflösung des Sensors verursacht.
Konkret wird nun die Genauigkeit der Auswertung einer entsprechend Fig. 2 mit gekreuzten Codestreifen versehenen, in einem hochqualitativen Offset gedruckten Buchseite diskutiert. Für Zeitungen etc. gelten etwas weniger ehrgeizige Werte. Man unterstellt also ein Druckverfahren mit effektiv 1200 dpi, also mit einer maximal auflösbaren Linienbreite von 20 μ.

a) das gekreuzte Raster sei quadratisch mit einer "Gitterkonstante" **ly = lx = 1 = 9** mm und einer Codestreifen-Breite die es erlaubt, 5 Ziffern zu codieren (2 Ziffern für die Spalten- oder Zeilennummer, 2 für je zwei Ziffern der Seitenzahl, 1 Prüfziffer). Als Beispiel sei ein Barcode unterstellt, der jede dieser fünf Ziffern 0 < n < 9 als eine Linie mit einem Vielfachen der Breite **(n+1) * p** codiert, wobei auf jede dieser Linien ein Leerstreifen der Breite p folgen soll. Der Codestreifen ist folglich maximal **55* p** breit,. bei p = 0,1 mm also ca. 6 mm.

b) die Zwei-Farben-CCD-Lesezeile habe 4800 Pixel, entsprechend dem Stand der Technik bei Farbscannern; und sie sei auf ein entsprechendes Zeilensegment auf der Fläche von 24 mm Länge abgebildet, welches um einen Winkel α = 45 Grad (13) geneigt sei.

1 Sensor-Pixel entsprechen in dieser Auslegung etwa einem Quadrat von jeweils 5 μ Kantenlänge auf der Fläche. Die Längen **lx** und **ix, kx** (sowie entsprechend **ly** und **iy, ky** in y-Richtung) können bei idealer Kameraoptik auf rund 2 Pixel genau bestimmt werden, entsprechend 10 μ, sodass bei den im Obigen unterstellten idealen Verhältnissen eine absolute Positionsgenauigkeit von deutlich besser als 0,1 mm auf der Druckvorlage möglich ist.

Es sind eine Reihe von Verfahren beschrieben worden, die es gestatten, diese Werte noch zu verbessern.

2.6.2 Auslesegeschwindigkeit:

die Auslesegeschwindigkeit beträgt mit gängigen CCD-Detektorzeilen Millisekunden oder weniger. CCD-Flächendetektoren sind entsprechend langsamer, im Massenmarkt werden ca. 30 Bilder /Sek. gelesen.

2.7 Verallgemeinerung auf andere Muster und Lesegeräte

Es sind weitere Fortschritte bei der Drucktechnik zu erwarten, insbesondere bei Tintenstrahldruckern, sodass die unter 2.6 betrachteten Dimensionen weiter schrumpfen könnten. Nachstehend werden jedoch Verfahren diskutiert, die auf dem existierenden Stand der Technik aufbauend Verbesserungen versprechen. Die Aufzählung ist jedoch nicht abschliessend zu verstehen.

2.7.1 Varianten und Verbesserungen der optischen Vermessung

2.7.1.1 Herausfiltern von Tages- oder Fremdlicht

Will man die aufgebrachten Muster in einer Situation vermessen, in der auch Tages- oder Fremdlicht an die Fläche gelangt, so kann die UV-Lichtquelle oder ein anderer die Lumineszenz anregender Effekt vorteilhaft zeitlich moduliert werden, sodass sich die Muster **Gx** und **Gy** durch Auffinden und Analyse des lumineszierenden Wechselsignals gewinnen lassen.

2.7.1.2 Alternierende Anregungsspektren

Z.B. mittels eines Farbrades oder durch Verwendung von zwei Lichtquellen kann erreicht werden, dass **Gx** und **Gy** zu verschiedenen Zeitpunkten angeregt werden, sodass diese Muster mit einem ebenfalls zeitlich gemultiplexten monochromatischen Sensor ausgelesen werden können, welcher z.B. als CCD-Zeile höher auflöst als ein Farbsensor gleicher Technologie.

2.7.2 Ausleseverfahren mit zirkulären Linienrastern

Alternativ zu aus Geradensegmenten gebildeten Rastern können für das Auslesen der Muster kreisförmige Raster verwendet werden, z.B. indem ein Punktsensor von einer rotierenden, per Schrittmotor angetriebenen Achse bewegt wird. Bevorzugt kann ein Messkreis (42) auf der Oberfläche angenommen werden, welcher in durch den Sensor vorgegebener Weise in eine ganze Zahl von kleinen, gleich langen Segmenten unterteilt wird, wobei jedes dieser Segmente einem Messpunkt entspricht. Nun werden, von einem beliebigen Ausgangspunkt Ω (51) auf dem Messkreis ausgehend, schrittweise oder auch parallel für alle vorstehenden Segmente entlang des Messkreises die Werte des Parameters gemessen, welcher das Streifenmuster kennzeichnet (also z.B. die Lumineszenz). Diese Werte seien in einer Tabelle niedergelegt, ein Eintrag pro Kreissegment.

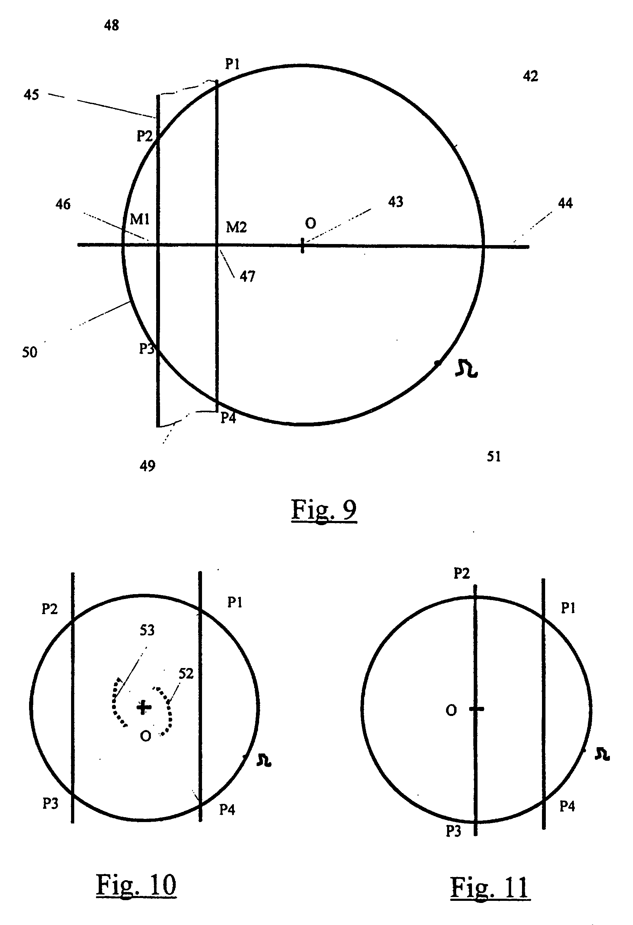

Aus der nachstehenden Betrachtung, die für die bevorzugte Nutzung von Barcode-ähnlichen Streifenmustern entsprechend Fig. 2, 3 und 4 angestellt wird, ergibt sich, dass damit die in diesen Mustern niedergelegten Informationen ebenso der Abstand des jeweiligen charakteristischen geometrischen Merkmales dieses Streifenmusters zum Mittelpunkt des Messkreises gefunden werden können. Dieses wird anhand von Fig. 9 diskutiert.

Der Messkreis (42) sei gross genug, um die zu vermessenden Streifenmuster immer ganz zu durchschneiden. Es existiert also für jeden Streifen in diesen Mustern, eine durch den Messkreis-Mittelpunkt O (43) geführte Gerade (44), welche auf dem jeweils zu vermessenden Streifen (45) senkrecht steht, und dessen Ränder innerhalb des Messkreises in den Punkten M1 (46) und M2 (47) schneidet. Der Messkreis schneidet nun den entsprechenden Streifen entlang der Kreissegmente P1_P2 (48) und P3_P4 (49), wobei beide Segmente relativ zur Geraden (44) spiegelsymmetrisch sind, also die gleiche Anzahl Pixel beinhalten. Nun sind die Segmente (48) und (49) durch das Kreissegment P2_P3 (50) verbunden, welches entweder weitere, anderen Streifen zugehörige Segmentenpaare enthält, oder nicht: im letzteren Fall ist der entsprechende Streifen der äusserste - bezogen auf den Mittelpunkt (43) - und für ihn können mittels einfacher Geometrie die Strecken O_M1 und O_M2 berechnet werden; diese Prozedur wiederholt sich für alle vom Messkreis erfassten Streifen, sodass schliesslich die Breite aller Streifen sowie deren Abstand zum Zentrum des Messkreises zur Verfügung stehen.

Figs. 10 und 11 zeigen jeweils Spezialfälle. die aus Fig. 9 hervorgehen. Bei Fig. 11 geht ein Rand des zu vermessende Streifens genau durch den Mittelpunkt des Messkreises, bei Fig. 10 ist letzterer im Streifen; für diese Alternativen muss die Breite des Streifens sowie der Abstand zum Mittelpunkt des Messkreises anders berechnet werden. Welche der Alternativen aus Fig.9, 10 oder 11 vorliegt, kann durch eine Analyse der Winkel P1_O_P4 (52), P2_O_P3 (53) entschieden werden. Diese Winkel ergeben sich wiederum aus der vorstehend beschriebenen Messwert-Tabelle.

2.7.3 Auslesen getrennter Linienraster

Wie in 2.4.1 dargelegt, erlaubt das Verfahren für ein eindimensionales Linienraster **Gx** nicht nur die Bestimmung der eindimensionalen Koordinate x des Messpunktes, sondern auch die des Winkels $\alpha$ bezogen auf **Gx** . Ist ein Lesegerät nun in der Lage, zwei Linienraster auf einmal auf der Fläche auszulesen und zwar so, dass die beiden Linienraster zueinander in einer starren geometrischen Beziehung liegen, so kann die Vermessung für das eine Linienraster eine Koordinate x liefern, und für das zweite Linienraster eine Koordinate y, sodass aus der Kenntnis dieser beiden Koordinaten die Position des Messpunktes K errechnet werden kann.

Aus dieser Überlegung lässt sich ein Lesegerät mit zwei zueinander versetzten Zeilendetektoren ableiten. Ebenso können daraus spezialisierte Bildverarbeitungsverfahren für Flächendetektoren (z.B. für einen Farb-Flächendetektor oder hochauflösende Monochrom-Flächenkamera mit Farbrad) abgeleitet werden derart, dass viele verschiedene Linienpaare gleichzeitig vermessen werden und durch Mittelung eine höhere Genauigkeit erzielt wird.

2.7.4 Andere Codes und andere Muster

Die Spaltennummern von **Gx** und die Zeilennummern von **Gy** können nicht nur als Barcodes, sondern auch als zweidimensionale Muster niedergelegt werden, die mit Flächensensoren z.B. in elektronischen Kameras ausgelesen werden; dieses gilt insbesondere für andere Muster nach 2.1 im Obigen. Ebenso können **Gx** und **Gy** mit jeweils mehr als einer Tinte - also mehrfarbig - gedruckt werden. Die Positionsbestimmung durch Auslesen solcher aufwendigerer Codes erlaubt eine bessere Fehlerbehandlung und kleinere Muster; dieser Vorteil wird jedoch mit höherer Komplexität der Hardund Software erkauft.

2.7.5 Mechanisch geführte Scanstifte mit Detektorzeile oder -fläche

Für die optische Positionsvermessung eines Zeilenrasters nutzbar sind auch Verfahren, welche die zu vermessende Fläche mit mechanisch geführten, *erweiterten* Optical-Character-Reading-Scanstiften abrastern. Die Erweiterung nutzt vorteilhaft eine zusätzliche UV-Lichtquelle in dem Stift, wodurch die waagerechten und senkrechten Codestreifen für den Scanstift lesbar gemacht werden; ferner eine Farb-Detektorzeile nach 2.5 im Stift.

Es sind für Scanstifte zwei Varianten denkbar:

a) mit quer zur Scanrichtung eingebauten Detektorzeilen

aa) bei ausreichend hoch auflösender Detektorzeile kann der Stift mit einem Messpunkt versehen werden und seine Detektorzeile wertet das Bildmuster gem. Fig. 4 aus. Der Stift muss dann in einem Modus betrieben werden, in dem er an die entsprechende Stelle der Fläche gehalten wird.

ab) der Scanstift fährt über den einer Detektorzeile (21), (24) entsprechenden Ausschnitt der Fläche. Um dabei den Bezug zu einem Messpunkt auf der Fläche herzustellen, kann der Stift in einer Schiene (37) geführt werden - z.B. an zwei Rädern (36), die in einer Rille (35) dieser Schiene laufen - wobei der Messpunkt (32) an der Schiene angebracht ist und zwar so, dass er ein am Scanstift angebrachtes Bürstenpaar (33) kurzschliesst, wenn dieses über den Punkt (32) fährt.

b) es sind jedoch Scanstifte beschrieben, die statt einer Detektorzeile Flächendetektoren einsetzen, und diese sind für die Detektion per Flächenmuster gem. Abschnitt 2.2 sowie Figs. 7 und 8 relevant. Der Scanstift als Lesegerät bietet den Vorteil, auf einer bekannten Auslesetechnik aufzusetzen und ein *duales* Gerät für Positionsbestimmung und OCR-Verfahren (insbesondere bei ganz normalen, nicht im Sinne dieser Erfindung präparierten Flächen) bereitzustellen.

2.7.6 Mechanisch / frei geführte Punktlesegeräte

Höhere Genauigkeiten versprechen Punktlesegeräte, die mechanisch oder frei über ein vorbestimmtes Liniensegment geführt werden und die Oberfläche entlang dieses Segmentes vermessen. Werden hierzu optische Effekte genutzt, so sind aus der CD-Player-Technik Verfahren bekannt, die Informationen mittels Lichtflecken von 1 μ oder weniger auslesen.

2.8 Aufbringung von Mustern mit anderen Materialien

Zum Drucken übereinander liegender Muster **Gx** und **Gy**, wobei z.B. **Gx** und **Gy** getrennt auslesbar bleiben können, stehen als Alternative zu lumineszierenden Tinten eine Reihe anderer Materialien zur Verfügung, die ebenfalls mit Druck- oder anderen Verfahren aufgebracht können, und die mit gerasterten Sensoren bezw. Punktlesegeräten nach 2.7.5 abgegriffen werden können.

Beschrieben wurden z.B. Tinten, Farben oder Beläge, die eine gerasterte Vermessung der Oberfläche - zwischen zwei Messpunkten oder mittels entsprechender Detektorzeilen oder -flächen - ermöglichen. z.B. unter lokaler Nutzung der Lumineszenz, des elektrischen Widerstands, der elektrischen Spannung oder des elektrischen Stroms, der dielektrischen Konstante oder Kapazität, der thermischen Leitfähigkeit, der Transmissions- und Reflexionsfähigkeit für polarisiertes oder unpolarisiertes Licht, des optischen Brechungsindexes, des lokalen Elastizitätsmoduls, der magnetischen Feldstärke und des magnetischen Widerstands gestatten. Weiters können die Muster **Gx** und **Gy** mit thermochromen oder elektrochromen Tinten aufgebracht und somit durch Erhitzen oder Anbringen einer Spannung nachgewiesen werden. Ferner können **Gx** und **Gy** durch mechanische Abtastung erkannt werden.

2.9 Kombination verschiedener Verfahren

Die im Obigen und insbesondere Pkt. 2.8 aufgeführten Vermessungsverfahren für die ein- oder zweidimensionale Abrasterung der Gittermuster lassen sich vorzugsweise kombinieren, sofern sie ein gleichzeitiges und von einander unabhänges Auslesen der gekreuzten Gitter gestatten.

**Patentansprüche**

1.  Informationsträger, auf dem die Position eines Meßpunktes (23) mit einem mobilen Lesegerät bestimmbar ist, wobei:

    - der Informationsträger eine Fläche aufweist, auf der eine visuell sichtbare Primärinformation aufgebracht ist, insbesondere nach Art einer Partitur, eines Buches oder einer Landkarte,
    - die Fläche mit wenigstens einem maschinenlesbaren zweidimensionalen Muster bedruckt ist, welches eine Positionsinformation kodiert,
    - das Muster, welches die Positionsinformation kodiert, derart transparent ist, daß die Primärinformation auf der Fläche visuell sichtbar bleibt,

    **dadurch gekennzeichnet, dass**
    das Muster zwei gekreuzte, jeweils einer Koordinatenachse zugeordnete Gitter von parallelen Codestreifen (22, 20) und (18, 19) aufweist, die jeweils in einem festen Winkel zu ihrer zugeordneten Koordinatenachse angebracht sind, **wobei** jeder Codestreifen eine interne Struktur aufweist, welche seine Position entlang seiner zugeordneten Koordinatenachse codiert, und wobei dieser Codestreifen entlang der anderen Koordinatenachse homogen ausgeführt ist und sich über die ganze Fläche erstreckt, sodass er auch von einem manuell geführten Punktlesegerät erkannt und decodiert werden kann, **sodass** durch Vermessen eines lokal erfassten Teils (21) des Musters und Verarbeitung der daraus gewonnenen Daten die Position eines Codestreifens entlang der ihm zugeordneten Koordinatenachse decodiert werden kann und somit die absolute Positionsbestimmung des Messpunktes (23) entlang dieser Koordinatenachse durchgeführt wird, wobei dieser Vorgang für beide Koordinatenachsen erfolgt.

2.  Informationsträger nach Anspruch 1, wobei das Lesegerät nach Positionsbestimmung eines Punktes (23) auf der Fläche einen dieser Position entsprechenden Programmprozeß aufrufen kann, wodurch auch nach Fertigstellung der bedruckten Fläche des Informationsträgers jede Position darauf ohne Nachbearbeitung der Fläche mit einem abrufbaren Programmprozeß ausgestattet werden kann.

3.  Informationsträger nach einem der vorstehenden Ansprüche, bei welchem die Fläche eine veränderbare Form aufweist, z.B. nach Art einer Folie oder Papierseite, welche während des Meßvorganges und mindestens in der lokalen Umgebung der vom Benutzer jeweils vermessenen Stelle in eine vorbestimmte, bevorzugt ebene, Form bringbar ist.

4. Informationsträger nach Anspruch 1, bei welchem mehrere Musterkombinationen einander überlagern, und wobei jedes Muster getrennt auslesbar ist, um die Genauigkeit des Ausleseverfahrens zu erhöhen.

5. Informationsträger nach Anspruch 1, bei welchem der Abstand (14) der charakteristischen Merkmale zwei aufeinanderfolgender Codestreifen jederzeit nachgemessen werden kann, um Veränderungen der Fläche seit Drucklegung oder Herstellung teilweise zu kompensieren.

6. Informationsträger nach einem der Ansprüche 1 bis 5, bei welchem die beiden Gitter mit jeweils verschiedenen Materialien, insbesondere Drucktinten aufgebracht sind, und zwar in einer so gerasterten Weise, daß diese Materialien einander an keinem Punkt der Vorlage überlappen und folglich die Gitter getrennt auslesbar sind.

7. Informationsträger nach einem der Ansprüche 1 bis 5, bei welchem ein oder mehrere Gitter lumineszierend ausgebildet sind, und bei welchem die Gitter einander partiell überlappen und dennoch getrennt ausgelesen werden können, insbesondere indem jedes der verwendeten Gitter in einer eigenen Kombination von Spektrallinien so luminesziert, daß die vom jeweiligen Gitter (7) emittierte Strahlung von allen darüber liegenden Gittern (6) durchgelassen wird.

8. Informationsträger nach einem der vorstehenden Ansprüche, bei welchem jedes der aufgedruckten Gitter (6, 7) bei zeitlich gemultiplexter Anvegung getrennt auslesbar ist.

9. Informationsträger nach einem der Ansprüche 1 bis 8, mit einem oder mehreren Gittern, welche jeweils durch Messung ihres elektrischen Widerstandes, ihrer Magnetisierung, ihrer Dielektrizitätskonstante, ihrer Transmittivität oder Reflexivität gegenüber polarisierter und unpolarisierter Strahlung, ihrer thermischen Leitfähigkeit, ihrer mechanischen Steifigkeit, ihrer Lichtabsorptiön, ihres Brechungsindexes, sowie absoluter oder relativer Höhenunterschiede einzelner Rasterelemente und/oder durch Nutzung ihrer thermochromen oder elektrochromen Eigenschaften nachweisbar sind.

10. Informationsträger nach einem der Ansprüche 1 bis 9, bei welchem eine Kombination von Gittern eingesetzt wird, die übereinander liegen können und wobei dennoch jedes Gitter getrennt meßbar ist.

11. Informationsträger nach einem der Ansprüche 1 bis 9, bei welchem ein Muster aus zwei oder mehr einander partiell überlagernder Gittern mit derselben Tinte so gedruckt wird, dass jede Stelle des Musters, aufgrund des dort gemessenen Wertes eines physikalischen Parameters dieser Tinte, einem oder mehreren Gittern zugeordnet werden kann.

12. Verfahren zur Positionsbestimmung eines Meßpunktes (23) mit einem mobilen Lesegerät, auf einer Fläche eines Informationsträgers nach einem der Ansprüche 1 bis 11,
wobei das Verfahren folgende Schritte aufweist :

Vermessen eines lokal erfassten Teils (21) des Musters; Verarbeitung der daraus gewonnenen Daten; Decodieren der Position eines Codestreifens entlang der ihm zugeordneten Koordinatenachse und Bestimmung der absoluten Position des Messpunktes (23) entlang dieser Koordinatenachse, wobei diese Schritte für beide Koordinatenachsen durchgeführt werden.

13. Verfahren nach Anspruch 12, wobei das Lesegerät nach Positionsbestimmung eines Punktes (23) auf der Fläche einen dieser Position entsprechenden Programmprozeß aufruft, und wobei auch nach Fertigstellung der bedruckten Fläche jede Position darauf mit einem abrufbaren Programmprozeß ausgestattet werden kann, und zwar ohne jegliche Nachbearbeitung der Fläche.

14. Verfahren nach Anspruch 12, bei welchem mehrere einander überlagernde Musterkombinationen in getrennten Schritten ausgelesen werden, um die Genauigkeit des Ausleseverfahrens zu erhöhen.

15. Verfahren nach Anspruch 12, bei welchem der Abstand (14) der charakteristischen Merkmale zwei aufeinanderfolgender Codestreifen nachgemessen wird, um Veränderungen der Fläche seit Drucklegung oder Herstellung teilweise zu kompensieren.

**16.** Verfahren nach Anspruch 12, bei welchem die beiden Gitter mit jeweils verschiedenen Materialien, insbesondere Drucktinten aufgebracht sind, und zwar in einer so gerasterten Weise, daß diese Materialien einander an keinem Punkt der Vorlage überlappen und die Gitter getrennt auslesbar sind.

**17.** Verfahren nach einem der Ansprüche 12 bis 16, bei dem ein oder mehrere Gitter, nachgewiesen werden durch Messung ihres elektrischen Widerstandes, ihrer Magnetisierung, ihrer Dielektrizitätskonstante, ihrer Transmittivität oder Reflexivität gegenüber polarisierter und unpolarisierter Strahlung, ihrer thermischen Leitfähigkeit, ihrer mechanischen Steifigkeit, ihrer Lichtabsorption, ihres Brechungsindexes, sowie absoluter oder relativer Höhenunterschiede einzelner Rasterelemente und/oder durch Nutzung ihrer thermochromen oder elektrochromen Eigenschaften.

**18.** Verfahren nach einem der Ansprüche 12 bis 17, bei welchem eine Kombination von Gittern eingesetzt wird, die übereinander liegen können und wobei dennoch jedes Gitter getrennt meßbar ist.

**19.** Verfahren nach einem der Ansprüche 12 bis 17, bei welchem ein Muster aus zwei oder mehr einander partiell überlagernder Gitter mit derselben Tinte so gedruckt wird, dass jede Stelle des Musters, aufgrund des dort gemessenen Wertes eines physikalischen Parameters dieser Tinte, einem oder mehreren Gittern zugeordnet werden kann.

**20.** Verfahren nach Anspruch 12, wobei ein zwischen Ausleseraster und Codestreifen gemessener Winkel automatisch oder manuell nachgestellt werden kann, Wenn das Ausleseverfahren dieses erfordert.

## Claims

**1.** An information carrier, on which a position can be determined for a measuring point (23) using a mobile reading device, wherein:

- the information carrier comprises a surface to which a visible primary information has been applied, in particular in the manner of sheet music, a book or a map,
- at least one machine-readable two-dimensional pattern has been printed on the surface, said pattern coding a position information,
- the pattern coding the position information is transparent in such a way that the primary information on the surface will remain visible,

**characterized in that**
the pattern comprises two crossed lattices, respectively assigned to a coordinate axis, and made of parallel code stripes (22, 20) and (18, 19), which are respectively positioned at a fixed angle to their assigned coordinate axis, wherein each code stripe has an internal structure, coding its position along its assigned coordinate axis and wherein that code stripe is homogeneous along the other coordinate axis and is extended over the entire surface, so that it can be detected and decoded by a manually guided point reading device, so that by measuring a locally scanned part (21) of the pattern and processing the resulting data, the position of a code stripe along its assigned coordinate axis may be decoded and therefore the absolute position determination for the measurement point (23) along that coordinate axis may be performed, wherein such procedure is performed for both coordinate axes.

**2.** The information carrier according to claim 1, wherein upon finding a position for a measuring point (23) on the surface, the reading device may call a program process corresponding to said position, whereby even after the production of the printed surface of the information carrier has been completed, any position on it may have, without reworking of said surface, a callable program process assigned to it.

**3.** The information carrier according to one of the preceding claims, wherein the surface may change its shape, e.g. in the manner of a foil or a paper page, which during the sampling pass and at least in the vicinity of the location being measured by the user, can be brought into a predefined, preferrably plane shape.

**4.** The information carrier according to claim 1, wherein several combinations of patterns overlap each other, and wherein every pattern can be read out separately, so as to increase the accuracy of the readout process.

5. The information carrier according to claim 1, wherein the distance (14) of the characteristic features of two consecutive parallel code stripes can be measured at any time, in order to partially compensate for changes in the surface that may have taken place after printing or production.

6. The information carrier according to one of the claims 1 through 5, wherein the two lattices are applied to the surface using respectively different materials, in particular printing inks, and using printing rasters such that those materials do not overlap at any point of the surface and consequently the lattices can be read out separately.

7. The information carrier according to one of the claims 1 through 5, wherein one or more lattices are luminescent, and wherein the lattices partially overlap each other and can nevertheless be read out separately, particularly wherein each lattice being used luminesces in its specific spectrum in such a way that the respective luminescence light of lattice (7) can be transmitted through all lattices (6) that are laid on top of it.

8. The information carrier according to one of the preceding claims, wherein, under time-multiplexed excitation each printed lattice (6,7) is readable out separately.

9. The information carrier according to one of the claims 1 to 8, carrying one or more lattices that are detectable by sampling their electrical resistance, magnetization, dielectric constant, transmittivity or reflexivity for polarized and unpolarized radiation, thermal conductivity, mechanical compliance, light absorption, refractive index, as well as absolute or relative differences in height between individual raster pixels and/or by exploiting their thermochromic or electrochromic properties.

10. The information carrier according to one of the claims 1 through 9, wherein a combination of lattices is used that may be laid down on top of each other but wherein nevertheless each lattice can be read out separately.

11. The information carrier according to one of the claims 1 through 9, wherein a pattern of two or more partially overlapping lattices is printed with one single ink in such a way that any location in the pattern can be assigned to one or more lattices, based on the value of a physical parameter of said ink, measured at said location.

12. A method for determining the position of a measuring point (23) by using a mobile reading device on the surface of an information carrier according to one of the claims 1 through 11, comprising the following steps:

- measuring a locally scanned part (21) of the pattern
- processing the resulting data;, decoding the position of a code stripe along its assigned coordinate axis
- determining the absolute position of the measurement point (23) along that coordinate axis

wherein such steps are performed for both coordinate axes.

13. The method according to claim 12, wherein upon finding a position for a measuring point (23) on the surface, the reading device calls a program process corresponding to said position, and wherein, even after production of the printed surface has been completed, any position on it may have a callable program process assigned to it, without any reworking of said surface.

14. The method according to claim 12, wherein several combinations of overlapping patterns are read out in separate steps, so as to increase the accuracy of the readout process.

15. The method according to claim 12, wherein the distance (14) of the characteristic features of two consecutive parallel code stripes is measured in order to partially compensate for changes in the surface that may have taken place after printing or production.

16. The method according to one of the claim 12, wherein the two lattices are applied to the surface using respectively different materials, in particular printing inks, and using printing rasters in such a way that those materials do not overlap at any point of the surface and the lattices can be read out separately.

17. The method according to one of the claims 12 to 16, wherein one or more lattices are detected by sampling their electric resistance, magnetization, dielectric constant, transmittivity or reflexivity for polarized and unpolarized radiation, thermal conductivity, mechanical compliance, light absorption, refractive index, as well as absolute or relative differences in height between individual raster pixels and/or by exploiting their thermochromic or electrochromic properties.

18. The method according to one of the claims 12 through 17, wherein a combination of lattices is used that may be laid down on top of each other but wherein nevertheless each lattice can be read out separately.

19. The method according to one of the claims 12 through 17, wherein a pattern of two or more partially overlapping lattices is printed with one single ink in such a way that any location in the pattern can be assigned to one or more lattices, based on the value of a physical parameter of said ink, measured at said location.

20. The method according to claim 12 wherein an angle measured between the readout raster and the code stripe may be adjusted manually or automatically if required by the sampling method.

**Revendications**

1. Support d'information, permettant la détermination de la position d' un point de référence (23) à l'aide d'un dispositif de mesure mobile, **caractérisé en ce que** :

   - ledit support comprend une surface sur laquelle une information visuelle primaire a été appliquée, en particulier sous la forme d' une partition musicale, d' un livre, ou d' une carte géographique
   - au moins un dessin bidimensionnel lisible par machine a été imprimé sur cette surface, ledit dessin codant une information de position
   - le dessin codant l'information de position est transparent de manière à laisser visible l'information primaire sur ladite surface,

   **caractérisé en ce que**
   ledit dessin comporte deux réseaux de trame croisés, assignés respectivement à un axe de coordonnées et constitués de raies de codage parallèles (22, 20) et (18, 19), lesquels forment respectivement un angle déterminé avec l' axe de coordonnées leur correspondant et dans lesquels chacune desdites raies est dotée d' une structure interne codant sa position le long de cet axe de coordonnées, tout en étant homogène le long de l' autre axe de coordonnées, ladite raie s' étendant sur toute ladite surface, de manière à pouvoir être détectée et décodée au moyen d'un dispositif de lecture ponctuelle, guidé à la main, permettant, par mesurage d'une zone localisée (21) du dessin et traitement des données résultant de cette mesure, de décoder la position de la raie de codage le long de l'axe de coordonnées lui correspondant, et de déterminer ainsi la position absolue du point de référence (23) sur cet axe de coordonnées, cette procédure étant éxécutée pour les deux axes de coordonnées.

2. Support d'information selon la revendication 1, **caractérisé en ce que** le dispositif de lecture ayant déterminé la position du point de référence (23) sur la surface, il fait appel à un procédé programme correspondant à cette position, de manière à ce que, même après la finition de la surface imprimée de ce support d'information, il soit possible d'assigner un procédé programme à une position quelconque de cette surface sans avoir à retravailler cette dernière.

3. Support d'information selon l'une des revendications précédentes, **caractérisé en ce que** la surface possède une forme changeante, par exemple à la manière d'une feuille ou d'une page en papier, laquelle adopte une forme prédéfinie, de préférence plane, pendant le processus de mesure, et au moins à proximité de la zone mesurée par l'utilisateur.

4. Support d'information selon la revendication 1, **caractérisé en ce que** plusieurs combinaisons de dessins se recouvrent mutuellement, chaque dessin étant lisible séparément, de manière à augmenter la résolution du processus de lecture.

5. Support d'information selon la revendication 1, **caractérisé en ce que** la distance (14) séparant les traits caractéristiques de deux raies de codages parallèles et consécutives est mesurée à tout moment, afin de compenser partiellement des changements de la surface apparus après l' impression ou la fabrication de cette surface.

6. Support d'information selon l'une des revendications 1 à 5, **caractérisé en ce que** l'application des deux réseaux de trame à la surface utilise des matériaux respectivement différents, en particulier des encres respectivement différentes, et selon une disposition de trame choisie de façon à ce que ces matériaux différents ne se recouvrent en aucun lieu de la surface, permettant ainsi la lecture séparée de chacun des réseaux de trame.

7. Support d'information selon l'une des revendications 1 à 5, **caractérisé en ce qu'**un ou plusieurs réseaux de trame est luminescent, ces réseaux se recouvrant partiellement les uns les autres, cependant que chaque réseau peut être lu séparément, en particulier du fait que chacun des réseaux émet un spectre de luminescence qui lui est propre et du fait que le rayonnement émis par chacun des réseaux (7) peut traverser tous les réseaux (6) qui le recouvrent.

8. Support d'information selon l'une des revendications précédentes, **caractérisé en ce que** chacun des réseaux de trame imprimés (6, 7) est lisible séparément au moyen d'une excitation multiplexée dans le temps.

9. Support d'information selon l'une des revendications 1 à 8, comprenant un ou plusieurs réseaux de trame, **caractérisé en ce que** chaque réseau de trame est détectable par mesure de leur résistance électrique, de leur magnétisation, de leur constante diélectrique, de leur pouvoir de transmission ou de réflexion d'un rayonnement, polarisé ou non, de leur conductivité thermique, de leur raideur mécanique, de leur pouvoir d'absorption de la lumière, de leur indice de réfraction, ainsi que des différences absolues ou relatives de hauteur entre les éléments individuels du réseau de trame, et / ou par exploitation de leurs propriétés thermiques ou electrochromiques.

10. Support d'information selon l'une des revendications 1 à 9, **caractérisé en ce qu'**il comprend une combinaison de réseaux de trame se recouvrant mutuellement, chaque réseau pouvant néanmoins être lu séparément.

11. Support d'information selon l'une des revendications 1 à 9 **caractérisé en ce qu'**un dessin formé de deux ou plusieurs réseaux de trame se recouvrant partiellement, est imprimé en utilisant une seule encre, de manière à ce que toute partie du dessin puisse être affectée à un ou plusieurs réseaux de trame, en fonction de la valeur d'un paramètre physique de l'encre mesuré à cet endroit.

12. Procédé permettant de déterminer la position d'un point de référence (23), au moyen d'un dispositif de mesure mobile, sur la surface d'un support d'information conforme à l'une des revendications 1 à 11, **caractérisé en ce qu'**il comprend les étapes suivantes:

    - mesurage d'une zone localisée (21) de ce dessin,
    - traitement des données résultantes,
    - décodage de la position d'une raie de codage sur l'axe de coordonnées lui correspondant, et
    - détermination de la position absolue du point de référence (23) sur cet axe de coordonnées,

    lesdites étapes étant exécutées pour les deux axes de coordonnées.

13. Procédé selon la revendication 12, **caractérisé en ce que** la position d' un point de référence(23) sur la surface ayant été déterminée, le dispositif de lecture fait appel à un procédé programme correspondant à cette position et **en ce que**, même après finition de la surface imprimée, il est possible d'assigner un procédé programme spécifique à une position quelconque sur cette surface, sans avoir à retravailler cette surface.

14. Procédé selon la revendication 12, **caractérisé en ce qu'**une pluralité de combinaisons de dessins se recouvrant mutuellement, sont lues lors d'étapes séparées, de manière à augmenter la précision du procédé de lecture.

15. Procédé selon la revendication 12, **caractérisé en ce que** la distance (14) séparant les traits caractéristiques de deux raies de codages parallèles et consécutives est mesurée de façon à compenser partiellement les changements de la surface apparus lors de l' impression ou lors de la fabrication de celle-ci.

16. Procédé selon la revendication 12, où l'application des deux réseaux de trame à la surface utilise des matériaux respectivement différents, en particulier des encres respectivement différentes, et, ce, selon une disposition de trame choisie de façon à ce que ces matériaux ne se recouvrent en aucun lieu de la surface, permettant ainsi la lecture séparée desdits réseaux de trame.

17. Procédé selon l'une des revendications 12 à 16, **caractérisé en ce qu'**une pluralité de réseaux de trame est détectée par mesure de leur résistance électrique, de leur magnétisation, de leur constante diélectrique, de leur pouvoir de transmission ou de reflexion d'un rayonnement, polarisé ou non, de leur conductivité thermique, de leur raideur mécanique, de leur pouvoir d'absorption de la lumière, de leur indice de réfraction, ainsi que des différences absolues ou relatives de hauteur entre les éléments individuels du réseau de trame et/ou par exploitation de leurs propriétés thermiques ou electrochromiques.

18. Procédé selon l'une des revendications 12 à 17, **caractérisé en ce qu'**il met en oeuvre une combinaison de réseaux de trame se recouvrant mutuellement, chaque réseau pouvant néanmoins être lu séparément.

19. Procédé selon l'une des revendications 12 à 17, **caractérisé en ce qu'**un dessin formé de deux ou plusieurs réseaux de trame se recouvrant partiellement, est imprimé en utilisant une seule encre, de manière à pouvoir assigner tout endroit de ce dessin à un ou plusieurs réseaux de trame, sur la base de la valeur d' un paramètre physique de cette encre, mesuré en cet endroit.

20. Procédé selon la revendication 12, **caractérisé en ce qu'**un angle mesuré entre la grille de lecture et la raie de codage est ajusté à la main ou de manière automatique, lorsque celà est nécessaire pour permettre la mesure.

# Fig. 1

seitennr. 23
zeilennr. 85

spaltennr. 43

# Fig. 2

EP 1 163 627 B1

Fig. 3

23

# Fig. 4

# Fig. 5

Fig. 6

Fig. 7

41

39

40a

40

# Fig. 8

Fig. 9

Fig. 10

Fig. 11